(19) **Europäisches Patentamt / European Patent Office / Office européen des brevets**

(11) **EP 4 715 908 A1**

(12) **EUROPEAN PATENT APPLICATION**
published in accordance with Art. 153(4) EPC

(43) Date of publication:
**25.03.2026 Bulletin 2026/13**

(21) Application number: **24862925.5**

(22) Date of filing: **06.09.2024**

(51) International Patent Classification (IPC):
*H01M 4/62* (2006.01)     *C08F 293/00* (2006.01)
*H01M 4/13* (2010.01)     *H01M 4/139* (2010.01)
*H01M 10/052* (2010.01)    *H01M 10/058* (2010.01)
*H01M 10/0562* (2010.01)

(52) Cooperative Patent Classification (CPC):
**C08F 293/00; H01G 11/38; H01M 4/13;**
**H01M 4/139; H01M 4/62; H01M 10/052;**
**H01M 10/0525; H01M 10/0562; H01M 10/058;**
**Y02E 60/10**

(86) International application number:
**PCT/JP2024/032117**

(87) International publication number:
**WO 2025/053276 (13.03.2025 Gazette 2025/11)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **06.09.2023 JP 2023144752**

(71) Applicant: **Daikin Industries, Ltd.**
**Osaka-shi, Osaka 530-0001 (JP)**

(72) Inventors:
• **TERADA, Junpei**
  **Osaka-Shi, Osaka 530-0001 (JP)**

• **ICHINOSE, Yuma**
  **Osaka-Shi, Osaka 530-0001 (JP)**
• **FURUTANI, Takahiro**
  **Osaka-Shi, Osaka 530-0001 (JP)**
• **YAMADA, Takaya**
  **Osaka-Shi, Osaka 530-0001 (JP)**
• **YAMAZAKI, Shigeaki**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **BINDER FOR SOLID ELECTROLYTE BATTERY, SLURRY, ELECTRODE, AND SOLID ELECTROLYTE BATTERY**

(57)     Provided is a binder for a solid-state electrolyte battery, comprising a polymer comprising a segment A having a glass transition temperature of 25°C or less and a segment B having a melting point of 50°C or more.

**EP 4 715 908 A1**

**Description**

TECHNICAL FIELD

The present disclosure relates to a binder for a solid electrolyte battery, a slurry, an electrode, and a solid electrolyte battery.

BACKGROUND ART

Patent Literature 1 discloses a binder to be used in a slurry for a solid-state battery containing sulfide-based solid-state electrolyte particles, wherein the binder contains a fluorine-containing elastomer having a resin end functional group satisfying:

$$0.01 \leq ([-CH_2OH] + [-COOH])/([-CH_3] + [-CF_2H] + [-CH_2OH] + [-CH_2I] + [-OC(O)RH] + [-COOH] \leq 0.25,$$

wherein R represents an alkyl group having 1 to 20 carbon atoms.
Patent Literature 2 discloses a binder to be used in a slurry for a solid-state battery containing sulfide-based solid-state electrolyte particles, wherein the binder contains a polymer having a vinylidene fluoride unit, and at least one copolymerization unit (A) selected from the group consisting of a monomer unit having a structure represented by the following general formula (1) and a monomer unit having a structure represented by the following general formula (2).

a

general formula (b1): $-(CH_2-CFRf^1)-$

a

general formula (b2): $-(CHF-CHRf^2)-$

wherein $Rf^1$ and $Rf^2$ are linear or branched fluorinated alkyl groups or fluorinated alkoxy groups having 1 to 12 carbon atoms, and, when the number of carbon atoms is 2 or more, optionally includes oxygen atom between carbon atoms thereof.

RELATED ART

PATENT DOCUMENTS

Patent Literature 1: International Publication No. WO 2021/015230
Patent Literature 2: International Publication No. WO 2021/015229

SUMMARY OF THE INVENTION

PROBLEM TO BE SOLVED BY THE INVENTION

An object of the present disclosure is to provide a binder for a solid electrolyte battery that can form a solid electrolyte layer or an electrode material layer having excellent adhesiveness and toughness.

MEANS FOR SOLVING THE PROBLEM

According to the present disclosure, provided is a binder for a solid electrolyte battery containing a polymer containing a segment A having a glass transition temperature of 25°C or less and a segment B having a melting point of 50°C or more.

EFFECT OF INVENTION

According to the present disclosure, it is possible to provide a binder for a solid electrolyte battery that can form a solid electrolyte layer or an electrode material layer having excellent adhesiveness and toughness.

DESCRIPTION OF EMBODIMENTS

Hereinafter, specific embodiments of the present disclosure will be described in detail, but the present disclosure is not limited to the following embodiments.

A solid-state electrolyte battery including a positive electrode material layer, a negative electrode material layer, and a solid-state electrolyte layer formed between the positive electrode material layer and the negative electrode material layer is known. Since bending stress is applied to the solid-state electrolyte layer and the electrode material layer of the electrode, the binder used to form the solid-state electrolyte layer and the electrode material layer is required to have properties capable of providing a solid-state electrolyte layer and an electrode material layer that have excellent flexibility and can withstand bending stress. As the binder having excellent performance in flexibility, Patent Literature 1 proposes a binder containing a fluorine-containing elastomer.

The solid electrolyte layer and electrode material layer formed using the binder disclosed in Patent Literature 1 has sufficient softness to such an extent that no cracks occur. On the other hand, in some methods for producing a battery, not only bending stress but also tension is imparted to the solid electrolyte layer and the electrode material layer. The present inventors have found that, when not only softness but also toughness can be imparted to the solid electrolyte layer and the electrode material layer used in such production methods, a battery exhibiting high performance can be produced.

The binder for a solid-state electrolyte battery of the present disclosure is developed under such circumstances, and a solid-state electrolyte layer or an electrode material layer having excellent toughness can be formed by using the binder for a solid-state electrolyte battery of the present disclosure, without impairing excellent flexibility.

In the present disclosure, the flexibility and toughness of the solid-state electrolyte layer and the electrode material layer can be confirmed by performing, for example, a three-point bending test of a test laminate including a solid-state electrolyte layer and a transfer sheet, or an electrode including an electrode material layer. The solid-state electrolyte layer of the test laminate or the electrode material layer of the electrode having a small maximum test force as measured by the three-point bending test can be said to have excellent flexibility. The solid-state electrolyte layer of the test laminate or the electrode material layer of the electrode having a large half width as measured by the three-point bending test can be said to have excellent toughness. When a curve is drawn by taking the stroke of an autograph as an abscissa and the stress as an ordinate using the results of the three-point bending test, the half width can be specified as the peak width at a stress half the peak of the stress.

Further, the solid-state electrolyte layer and the electrode material layer obtained by using the binder for a solid-state electrolyte battery of the present disclosure have excellent adhesiveness with a metal foil. Thus, the solid-state electrolyte layer and the electrode material layer obtained by using the binder for a solid-state electrolyte battery of the present disclosure are sufficiently adhered to other layers when being bended, and are hardly peeled.

That is, according to the present disclosure, provided is a binder for a solid electrolyte battery containing a polymer containing a segment A having a glass transition temperature of 25°C or less and a segment B having a melting point of 50°C or more (hereinafter, sometimes referred to as the first binder for a solid electrolyte battery).

In addition, according to the present disclosure, provided is a binder for a solid electrolyte battery containing a polymer, wherein the polymer has a glass transition temperature and a melting point, contains a 2,3,3,3-tetrafluoropropene unit, and has an extraction in tetrahydrofuran at 25°C of 5% by mass or less (hereinafter, sometimes referred to as the second binder for a solid electrolyte battery).

In the present disclosure, the solid-state electrolyte is an electrolyte in a solid state and is distinguished from a liquid electrolyte (non-aqueous electrolyte). The solid-state electrolyte includes a polymer electrolyte and an inorganic solid-state electrolyte. The binder for a solid-state electrolyte battery of the present disclosure can be particularly suitably used in a binder for an inorganic solid-state electrolyte battery or an all solid-state battery.

First, the constitution of the first binder for a solid electrolyte battery will be described in detail.

1. First binder for solid electrolyte battery

The first binder for a solid electrolyte battery contains a polymer containing the segment A and the segment B. The polymer may contain a further segment having a constitution different from the segment A and the segment B, as long as the polymer contains the segment A and the segment B.

(Segment A of polymer)

The segment A has a glass transition temperature of 25°C or less. The glass transition temperature of the segment A is preferably 0°C or less, more preferably -5°C or less, and further preferably -10°C or less. Because the first binder for a solid-state electrolyte battery contains the polymer containing the segment A having a glass transition temperature, a solid-state electrolyte layer or an electrode material layer having flexibility not significantly inferior as compared with the case of using a conventional binder can be formed.

The glass transition temperature can be determined by cooling 10 mg of a sample to -75°C using a differential scanning calorimeter (DSC822e manufactured by Mettler Toledo, or X-DSC7000 manufactured by Hitachi High-Tech Science Corporation) and then raising the temperature at 20°C/min to obtain a DSC curve and defining the temperature indicating an intersection point of the extensions of the base lines before and after the secondary transition of the DSC curve and the tangent line at an inflection point of the DSC curve as the glass transition temperature.

The heat of fusion of the segment A is preferably less than 5 J/g, more preferably less than 3 J/g, and further preferably less than 2 J/g, from the viewpoint of being able to further improve the softness of the solid electrolyte layer or the electrode material layer.

The heat of fusion can be calculated from the magnitude of the melting peak ($\Delta H$) of an endothermic curve obtained by raising the temperature of a sample at a rate of 10°C/min from 30°C to 220°C using a differential scanning calorimeter (DSC). When the polymer does not exhibit a clear melting peak, the polymer has no heat of fusion, that is, the heat of fusion of the polymer is 0 J/g.

The segment A may be a segment that does not exhibit a clear melting point.

The segment A preferably contains a fluorine-containing monomer unit, from the viewpoint of being able to improve the flame retarding property and heat resistance of the solid electrolyte layer and the electrode material layer. The fluorine-containing monomer capable of constituting the segment A is not limited, as long as it is a monomer containing a fluorine atom, and examples thereof include vinylidene fluoride [VdF], trifluoroethylene, tetrafluoroethylene [TFE], hexafluoropropylene, perfluoro(methylvinyl ether), perfluoro(ethylvinyl ether), perfluoro(propylvinyl ether), chlorotrifluoroethylene, hexafluoroisobutene, vinyl fluoride, a monomer that gives a repeating unit represented by the general formula (b1) described later, and a monomer that gives a repeating unit represented by the general formula (b2) described later.

The content of the fluorine-containing monomer unit in the segment A is preferably 50 mol% or more, more preferably 90 mol% or more, further preferably 99 mol% or more, preferably 100 mol% or less, and may be 100 mol%, based on all monomer units constituting the segment A.

The segment A may further contain a non-fluorine-containing monomer unit. Examples of the non-fluorine-containing monomer include ethylene, propylene, and alkylvinyl ether. The content of the non-fluorine-containing monomer unit is preferably 0 to 50 mol%, more preferably 0 to 10 mol%, further preferably 0 to 1 mol%, and may be 0 mol%, based on all monomer units constituting the segment A.

The segment A may further contain a unit based on a monomer having a reactive group such as a cyano group, a carboxyl group, an alkoxycarbonyl group, I, Br, $-CH_2OH$, or a carbon-carbon double bond. The content of the unit based on the monomer having a reactive group is preferably 0 to 50 mol%, more preferably 0 to 10 mol%, further preferably 0 to 1 mol%, and may be 0 mol%, based on all monomer units constituting the segment A.

In the present disclosure, the content of each monomer unit can be measured by an NMR method.

The segment A preferably contains at least a VdF unit or TFE unit, and more preferably contains at least a VdF unit as the fluorine-containing monomer unit. When the segment A contains a VdF unit, the glass transition temperature of the segment A can be easily adjusted to the desired range and the softness of the solid electrolyte layer or the electrode material layer can be further improved. In addition, when the segment A contains a VdF unit, the solvent solubility of the binder in a solvent such as butyl butyrate can be improved.

The content of the VdF unit in the segment A is preferably 99 to 15 mol%, more preferably 94 mol% or less, further preferably 88 mol% or less, further more preferably 82 mol% or less, particularly preferably 80 mol% or less, and more preferably 22 mol% or more, further preferably 50 mol% or more, further more preferably 60 mol% or more, and particularly preferably 70 mol% or more, based on all monomer units constituting the segment A.

The segment A more preferably contains at least one selected from the group consisting of a VdF unit and repeating units represented by any of the following formulas, from the viewpoint of further improving the softness of the solid electrolyte layer or the electrode material layer and further improving the solvent solubility of the binder in a solvent such as butyl butyrate.

Formula: $-CF_2-CF[-CF_3]-$

General formula (b1): $-CH_2-CFRf^1-$

In the formula, $Rf^1$ is a linear or branched fluorinated alkyl group or fluorinated alkoxy group having 1 to 12 carbon atoms, and, when the number of carbon atoms is 2 or more, optionally includes oxygen atom between carbon atoms thereof.

General formula (b2): $-CHF-CHRf^2-$

In the formula, $Rf^2$ is a linear or branched fluorinated alkyl group or fluorinated alkoxy group having 1 to 12 carbon atoms, and, when the number of carbon atoms is 2 or more, optionally includes oxygen atom between carbon atoms thereof.

The content of at least one unit selected from the group consisting of repeating units represented by any of the above formulas in the segment A is preferably 1 to 85 mol%, more preferably 6 mol% or more, further preferably 12 mol% or more, further more preferably 18 mol% or more, particularly preferably 20 mol% or more, and more preferably 78 mol% or less, further preferably 50 mol% or less, further more preferably 40 mol% or less, particularly preferably 30 mol% or less, based on all monomer units constituting the segment A.

The repeating unit represented by the formula: $-CF_2-CF[-CF_3]-$ is a repeating unit based on hexafluoropropylene. Thus, in one embodiment, the segment A contains a VdF unit and hexafluoropropylene unit.

In the general formula (b1): $-CH_2-CFRf^1-$, $Rf^1$ is a linear or branched fluorinated alkyl group having 1 to 12 carbon atoms or a linear or branched fluorinated alkoxy group having 1 to 12 carbon atoms. The fluorinated alkyl group and the fluorinated alkoxy group can each include oxygen atom (-O-) between carbon atoms thereof when the number of carbon atoms is 2 or more.

The fluorinated alkyl group of $Rf^1$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^1$ may have a hydrogen atom replaced by a substituent other than a fluorine atom, and preferably does not include a substituent other than a fluorine atom.

The fluorinated alkoxy group of $Rf^1$ may be a partially fluorinated alkoxy group in which a part of the hydrogen atoms bonded to the carbon atoms is replaced by a fluorine atom in some embodiments, and may be a perfluorinated alkoxy group in which all of the hydrogen atoms bonded to the carbon atoms are replaced by fluorine atoms in other embodiments. In addition, the fluorinated alkoxy group of $Rf^1$ may have a hydrogen atom replaced by a substituent other than a fluorine atom, and preferably does not include a substituent other than a fluorine atom.

The number of carbon atoms of $Rf^1$ is preferably 1 to 10, more preferably 1 to 6, further preferably 1 to 4, and particularly preferably 1.

$Rf^1$ is preferably a group represented by the general formula:

$$- (Rf^{11})_m-(O)_p-(Rf^{12}-O)_n-Rf^{13}$$

wherein $Rf^{11}$ and $Rf^{12}$ are each independently a linear or branched fluorinated alkylene group having 1 to 4 carbon atoms, $Rf^{13}$ is a linear or branched fluorinated alkyl group having 1 to 4 carbon atoms, p is 0 or 1, m is an integer of 0 to 4, and n is an integer of 0 to 4.

The fluorinated alkylene group of each of $Rf^{11}$ and $Rf^{12}$ may be a partially fluorinated alkylene group in which a part of the hydrogen atoms bonded to the carbon atoms is replaced by a fluorine atom in some embodiments, and may be a perfluorinated alkylene group in which all of the hydrogen atoms bonded to the carbon atoms are replaced by fluorine atoms in other embodiments. In addition, the fluorinated alkylene group of each of $Rf^{11}$ and $Rf^{12}$ may have a hydrogen atom replaced by a substituent other than a fluorine atom, and preferably does not include a substituent other than a fluorine atom. $Rf^{11}$ and $Rf^{12}$ may each, at each occurrence, be the same or different.

Examples of the fluorinated alkylene group of $Rf^{11}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 or 2 carbon atoms is preferable, and $-CF_2-$ is more preferable.

Examples of the fluorinated alkylene group of $Rf^{12}$ include $-CHF-$, $-CF_2-$, $-CH_2-CF_2-$, $-CHF-CF_2-$, $-CF_2-CF_2-$, $-CF(CF_3)-$, $-CH_2-CF_2-CF_2-$, $-CHF-CF_2-CF_2-$, $-CF_2-CF_2-CF_2-$, $-CF(CF_3)-CF_2-$, $-CF_2-CF(CF_3)-$, $-C(CF_3)_2-$, $-CH_2-CF_2-CF_2-CF_2-$, $-CHF-CF_2-CF_2-CF_2-$, $-CF_2-CF_2-CF_2-CF_2-$, $-CH(CF_3)-CF_2-CF_2-$, $-CF(CF_3)-CF_2-CF_2-$, and $-C(CF_3)_2-CF_2-$, and among these, a perfluorinated alkylene group having 1 or 3 carbon atoms is preferable, and $-CF_2-$, $-CF_2CF_2-$, $-CF_2-CF_2-CF_2-$, $-CF(CF_3)-CF_2-$, or $-CF_2-CF(CF_3)-$ is more preferable.

The fluorinated alkyl group of $Rf^{13}$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^{13}$ may have a hydrogen atom replaced by a substituent other than a fluorine atom, and preferably does not include a substituent other than a fluorine atom (for example, a reactive functional group such as -CN, -I, or -Br).

Examples of the fluorinated alkyl group of $Rf^{13}$ include $-CH_2F$, $-CHF_2$, $-CF_3$, $-CH_2-CH_2F$, $-CH_2-CHF_2$, $-CH_2-CF_3$, $-CHF-CH_2F$, $-CHF-CHF_2$, $-CHF-CF_3$, $-CF_2-CH_2F$, $-CF_2-CHF_2$, $-CF_2-CF_3$, $-CH_2-CF_2-CH_2F$, $-CHF-CF_2-CH_2F$, $-CF_2-CF_2-CH_2F$, $-CF(CF_3)-CH_2F$, $-CH_2-CF_2-CHF_2$, $-CHF-CF_2-CHF_2$, $-CF_2-CF_2-CHF_2$, $-CF(CF_3)-CHF_2$, $-CH_2-CF_2-CF_3$, $-CHF-CF_2-CF_3$, $-CF_2-CF_2-CF_3$, $-CF(CF_3)-CF_3$, $-CH_2-CF_2-CF_2-CF_3$, $-CHF-CF_2-CF_2-CF_3$, $-CF_2-CF_2-CF_2-CF_3$, $-CH(CF_3)-CF_2-CF_3$, $-CF(CF_3)-CF_2-CF_3$, and $-C(CF_3)_2-CF_3$, and among these, $-CF_3$, $-CHF-CF_3$, $-CF_2-CHF_2$, $-CF_2-CF_3$, $-CF_2-CF_2-CF_3$, $-CF(CF_3)-CF_3$, $-CF_2-CF_2-CF_2-CF_3$, $-CH(CF_3)-CF_2-CF_3$, or $-CF(CF_3)-CF_2-CF_3$ is preferable.

p is preferably 0.

m is preferably an integer of 0 to 2, more preferably 0 or 1, and further preferably 0. In addition, when p is 0, m is preferably also 0.

n is preferably an integer of 0 to 2, more preferably 0 or 1, and further preferably 0.

The repeating unit represented by the general formula (b1) is preferably

$-CH_2-CF[-CF_3]-$,

$-CH_2-CF[-CF_2CF_3]-$,

$-CH_2-CF[-CF_2CF_2CF_3]-$,

$-CH_2-CF[-CF_2CF_2CF_2CF_3]-$,

$-CH_2-CF[-CF_2-O-CF(CF_3)-CF_2-O-CHF-CF_3]-$,

$-CH_2-CF[-CF_2-O-CF(CF_3)-CF_2-O-CF_2-CF_3]-$,

$-CH_2-CF[-CF_2-O-CF(CF_3)-CF_2-O-CF(CF_3)-CF_3]-$,

$-CH_2-CF[-CF_2-O-CF(CF_3)-CF_2-O-CH(CF_3)-CF_2-CF_3]-$,

$-CH_2-CF[-CF_2-O-CF(CF_3)-CF_2-O-CF(CF_3)-CF_2-CF_3 -$

$-CH_2-CF[-OCF_2OCF_3]-$,

$-CH_2-CF[-OCF_2CF_2CF_2OCF_3]-$,

$-CH_2-CF[-CF_2OCF_2OCF_3]-$,

$-CH_2-CF[-CF_2OCF_2CF_2CF_2OCF_3]-$,

or

$-CH_2-CF[-O-CF_2-CF_3]-$,

and
more preferably

$-CH_2-CF[-CF_3]-$ or

$-CH_2-CF[-CF_2-O-CF(CF_3)-CF_2-O-CHF-CF_3]-$.

In the general formula (b2):$-CHF-CHRf^2-$, $Rf^2$ is a linear or branched fluorinated alkyl group having 1 to 12 carbon atoms or a linear or branched fluorinated alkoxy group having 1 to 12 carbon atoms. The fluorinated alkyl group and the fluorinated alkoxy group can each include oxygen atom (-O-) between carbon atoms thereof when the number of carbon atoms is 2 or more.

The fluorinated alkyl group of $Rf^2$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^2$ may have a hydrogen atom replaced by a substituent other than a fluorine atom, and preferably does not include a substituent other than a fluorine atom.

The fluorinated alkoxy group of $Rf^2$ may be a partially fluorinated alkoxy group in which a part of the hydrogen atoms bonded to the carbon atoms is replaced by a fluorine atom in some embodiments, and may be a perfluorinated alkoxy group in which all of the hydrogen atoms bonded to the carbon atoms are replaced by fluorine atoms in other embodiments. In addition, the fluorinated alkoxy group of $Rf^2$ may have a hydrogen atom replaced by a substituent other than a fluorine atom, and preferably does not include a substituent other than a fluorine atom.

The number of carbon atoms of $Rf^2$ is preferably 1 to 10, more preferably 1 to 6, further preferably 1 to 4, and particularly preferably 1.

$Rf^2$ is preferably a group represented by the general formula:

$$-(Rf^{21})_m-(O)_p-(Rf^{22}-O)_n-Rf^{23}$$

wherein $Rf^{21}$ and $Rf^{22}$ are each independently a linear or branched fluorinated alkylene group having 1 to 4 carbon atoms, $Rf^{23}$ is a linear or branched fluorinated alkyl group having 1 to 4 carbon atoms, p is 0 or 1, m is an integer of 0 to 4, and n is an integer of 0 to 4.

The fluorinated alkylene group of each of $Rf^{21}$ and $Rf^{22}$ may be a partially fluorinated alkylene group in which a part of the hydrogen atoms bonded to the carbon atoms is replaced by a fluorine atom in some embodiments, and may be a perfluorinated alkylene group in which all of the hydrogen atoms bonded to the carbon atoms are replaced by fluorine atoms in other embodiments. In addition, the fluorinated alkylene group of each of $Rf^{21}$ and $Rf^{22}$ may have a hydrogen atom replaced by a substituent other than a fluorine atom, and preferably does not include a substituent other than a fluorine atom. $Rf^{21}$ and $Rf^{22}$ may each, at each occurrence, be the same or different.

Examples of the fluorinated alkylene group of $Rf^{21}$ include -CHF-, -CF$_2$-, -CH$_2$-CF$_2$-, -CHF-CF$_2$-, -CF$_2$-CF$_2$-, -CF(CF$_3$)-, -CH$_2$-CF$_2$-CF$_2$-, -CHF-CF$_2$-CF$_2$-, -CF$_2$-CF$_2$-CF$_2$-, -CF(CF$_3$)-CF$_2$-, -CF$_2$-CF(CF$_3$)-, -C(CF$_3$)$_2$-, -CH$_2$-CF$_2$-CF$_2$-CF$_2$-, -CHF-CF$_2$-CF$_2$-CF$_2$-, -CF$_2$-CF$_2$-CF$_2$-CF$_2$-, -CH (CF$_3$)-CF$_2$-CF$_2$-, -CF (CF$_3$)-CF$_2$-CF$_2$-, and -C(CF$_3$)$_2$-CF$_2$-, and among these, a perfluorinated alkylene group having 1 or 2 carbon atoms is preferable, and -CF$_2$- is more preferable.

Examples of the fluorinated alkylene group of $Rf^{22}$ include -CHF-, -CF$_2$-, -CH$_2$-CF$_2$-, -CHF-CF$_2$-, -CF$_2$-CF$_2$-, -CF(CF$_3$)-, -CH$_2$-CF$_2$-CF$_2$-, -CHF-CF$_2$-CF$_2$-, -CF$_2$-CF$_2$-CF$_2$-, -CF(CF$_3$)-CF$_2$-, -CF$_2$-CF (CF$_3$)-, -C(CF$_3$)$_2$-, -CH$_2$-CF$_2$-CF$_2$-CF$_2$-, -CHF-CF$_2$-CF$_2$-CF$_2$-, -CF$_2$-CF$_2$-CF$_2$-CF$_2$-, -CH (CF$_3$)-CF$_2$-CF$_2$-, -CF (CF$_3$)-CF$_2$-CF$_2$-, and -C(CF$_3$)$_2$-CF$_2$-, and among these, a perfluorinated alkylene group having 1 or 3 carbon atoms is preferable, and -CF$_2$-, -CF$_2$CF$_2$-, -CF$_2$-CF$_2$-CF$_2$-, -CF(CF$_3$)-CF$_2$-, or -CF$_2$-CF(CF$_3$)- is more preferable.

The fluorinated alkyl group of $Rf^{23}$ may be a partially fluorinated alkyl group in which a part of the hydrogen atoms bonded to the carbon atoms is replaced by a fluorine atom in some embodiments, and may be a perfluorinated alkyl group in which all of the hydrogen atoms bonded to the carbon atoms are replaced by fluorine atoms in other embodiments. In addition, the fluorinated alkyl group of $Rf^{23}$ may have a hydrogen atom replaced by a substituent other than a fluorine atom, and preferably does not include a substituent other than a fluorine atom (for example, a reactive functional group such as -CN, -I, or -Br).

Examples of the fluorinated alkyl group of $Rf^{23}$ include -CH$_2$F, -CHF$_2$, -CF$_3$, -CH$_2$-CH$_2$F, -CH$_2$-CHF$_2$, -CH$_2$-CF$_3$, -CHF-CH$_2$F, - CHF-CHF$_2$, -CHF-CF$_3$, -CF$_2$-CH$_2$F, -CF$_2$-CHF$_2$, -CF$_2$-CF$_3$, -CH$_2$-CF$_2$-CH$_2$F, -CHF-CF$_2$-CH$_2$F, -CF$_2$-CF$_2$-CH$_2$F, -CF(CF$_3$)-CH$_2$F, -CH$_2$-CF$_2$-CHF$_2$, -CHF-CF$_2$-CHF$_2$, -CF$_2$-CF$_2$-CHF$_2$, -CF(CF$_3$)-CHF$_2$, -CH$_2$-CF$_2$-CF$_3$, -CHF-CF$_2$-CF$_3$, -CF$_2$-CF$_2$-CF$_3$, -CF(CF$_3$)-CF$_3$, -CH$_2$-CF$_2$-CF$_2$-CF$_3$, -CHF-CF$_2$-CF$_2$-CF$_3$, -CF$_2$-CF$_2$-CF$_2$-CF$_3$, -CH(CF$_3$)-CF$_2$-CF$_3$, -CF(CF$_3$)-CF$_2$-CF$_3$, and - C(CF$_3$)$_2$-CF$_3$, and among these, -CF$_3$, -CHF-CF$_3$, -CF$_2$-CHF$_2$, -CF$_2$-CF$_3$, -CF$_2$-CF$_2$-CF$_3$, -CF(CF$_3$)-CF$_3$, -CF$_2$-CF$_2$-CF$_2$-CF$_3$, -CH(CF$_3$)-CF$_2$-CF$_3$, or -CF(CF$_3$)-CF$_2$-CF$_3$ is preferable.

p is preferably 0.

m is preferably an integer of 0 to 2, more preferably 0 or 1, and further preferably 0. In addition, when p is 0, m is preferably also 0.

n is preferably an integer of 0 to 2, more preferably 0 or 1, and further preferably 0.

The repeating unit represented by the general formula b2) is preferably

-CHF-CH [-CF$_3$]-,

-CHF-CH [-CF$_2$CF$_3$]-,

-CHF-CH[-CF$_2$CF$_2$CF$_3$]-,

or

$$-CHF-CH[-CF_2CF_2CF_2CF_3]-,$$

and
more preferably

$$-CHF-CH[-CF_3]-.$$

Among these, the segment A preferably contains a VdF unit and a 2,3,3,3-tetrafluoropropene unit. When the segment A contains a VdF unit and a 2,3,3,3-tetrafluoropropene unit, the softness of the solid electrolyte layer or the electrode material layer can be further improved. In addition, the solvent solubility of the binder in a solvent such as butyl butyrate can be improved.

The content of the 2,3,3,3-tetrafluoropropene unit in the segment A is preferably 1 to 85 mol%, more preferably 6 mol% or more, further preferably 12 mol% or more, further more preferably 18 mol% or more, particularly preferably 20 mol% or more, and more preferably 78 mol% or less, further preferably 50 mol% or less, further more preferably 40 mol% or less, particularly preferably 30 mol% or less, based on all monomer units constituting the segment A.

In one embodiment, the segment A can be formed of a 2,3,3,3-tetrafluoropropene/VdF copolymer or a 2,3,3,3-tetrafluoropropene/VdF/TFE copolymer.

In the 2,3,3,3-tetrafluoropropene/VdF copolymer, the formulation of the 2,3,3,3-tetrafluoropropene unit/the VdF unit (mol%) is preferably (18 to 40)/(82 to 60), and more preferably (20 to 30)/(80 to 70).

In the 2,3,3,3-tetrafluoropropene/VdF/TFE copolymer, the formulation of the 2,3,3,3-tetrafluoropropene unit/the VdF unit/TFE unit (mol%) is preferably (18 to 40)/(81 to 25)/(1 to 35), and more preferably (20 to 40)/(75 to 30)/(5 to 30).

In one embodiment, the segment A contains a 2,3,3,3-tetrafluoropropene unit and a VdF unit, and the content of the monomer unit other than the 2,3,3,3-tetrafluoropropene unit and the VdF unit is preferably 0 to 10 mol%, more preferably 0 to 2 mol%, further preferably 0 to 1 mol%, further more preferably 0 to 0.1 mol%, and particularly preferably 0 mol%, based on all monomer units constituting the segment A. The content of the 2,3,3,3-tetrafluoropropene unit and the content of the VdF unit may be within the above range.

(Segment B of polymer)

The segment B has a melting point of 50°C or more. The melting point of the segment B is preferably 90°C or more, more preferably 140°C or more, and preferably 240°C or less, more preferably 220°C or less, further preferably 200°C or less. Because the first binder for a solid-state electrolyte battery contains the polymer containing the segment B having a melting point in addition to the segment A having a glass transition temperature, a solid-state electrolyte layer or an electrode material layer having excellent adhesiveness and toughness can be formed without impairing excellent flexibility.

The melting point can be determined as the temperature at the peak of an endothermic curve obtained by raising the temperature of a sample at a rate of 10°C/min from 30°C to 220°C using a differential scanning calorimeter (DSC).

The melting point of the segment B is usually the same as the melting point of the first polymer. Therefore, by measuring the melting point of the first polymer, the melting point of the segment B in the first polymer can be grasped.

The heat of fusion of the segment B is preferably 5 J/g or more, more preferably 10 J/g or more, further preferably 30 J/g or more, further more preferably 35 J/g or more, and preferably 90 J/g or less, more preferably 60 g/g or less, further preferably 55 J/g or less, from the viewpoint of further improving the adhesiveness, softness and toughness of the solid electrolyte layer or the electrode material layer.

The heat of fusion can be calculated from the magnitude of the melting peak ($\Delta$H) of an endothermic curve obtained by raising the temperature of a sample at a rate of 10°C /min from 30°C to 220°C using a differential scanning calorimeter (DSC).

The segment B preferably contains a fluorine-containing monomer unit, from the viewpoint of being able to improve the oxidation resistance of the solid electrolyte layer and the electrode material layer. The fluorine-containing monomer capable of constituting the segment B is not limited, as long as it is a monomer containing a fluorine atom, and examples thereof include vinylidene fluoride [VdF], trifluoroethylene, tetrafluoroethylene [TFE], hexafluoropropylene, perfluoro(methylvinyl ether), perfluoro(ethylvinyl ether), perfluoro(propylvinyl ether), chlorotrifluoroethylene, hexafluoroisobutene, and vinyl fluoride.

The content of the fluorine-containing monomer unit in the segment B is preferably 50 mol% or more, more preferably 90 mol% or more, further preferably 99 mol% or more, and preferably 100 mol% or less, based on all monomer units constituting the segment B.

The segment B may further contain a non-fluorine-containing monomer unit. Examples of the non-fluorine-containing monomer include ethylene, propylene, and alkylvinyl ether. The content of the non-fluorine-containing monomer unit is preferably 0 to 50 mol%, more preferably 0 to 10 mol%, further preferably 0 to 1 mol%, and may be 0 mol%, based on all monomer units constituting the segment B.

The segment B may further contain a unit based on a monomer having a polar group such as a carbonyl group-containing group, an epoxy group, a hydroxy group, a sulfonic acid group, a sulfuric acid group, a phosphoric acid group, an amino group, an amide group, or an alkoxy group.

Examples of the monomer having a polar group include a hydroxyalkyl (meth)acrylate such as hydroxyethyl acrylate or 2-hydroxypropyl acrylate; an unsaturated monobasic acid such as (meth)acrylic acid, crotonic acid, vinylacetic acid (3-butenoic acid), 3-pentenoic acid, 4-pentenoic acid, 3-hexenoic acid, or 4-heptenoic acid; an unsaturated dibasic acid such as maleic acid, maleic anhydride, citraconic acid, or citraconic anhydride; an alkylidenemalonate ester such as dimethyl methylidenemalonate; a vinyl carboxyalkyl ether such as vinyl carboxymethyl ether or vinyl carboxyethyl ether; a carboxyalkyl (meth)acrylate such as 2-carboxyethyl acrylate or 2-carboxyethyl methacrylate; a (meth)acryloyloxyalkyl dicarboxylate ester such as acryloyloxyethyl succinate, methacryloyloxyethyl succinate, acryloyloxyethyl phthalate, acryloyloxypropyl succinate, or methacryloyloxyethyl phthalate; and a monoester of an unsaturated dibasic acid such as monomethyl maleate, monoethyl maleate, monomethyl citraconate, or monoethyl citraconate.

The segment B preferably contains at least a VdF unit as the fluorine-containing monomer unit. When the segment B contains a VdF unit, the melting point of the segment B can be easily adjusted to the desired range, the adhesiveness and toughness of the solid electrolyte layer or the electrode material layer can be further improved. In addition, when the segment B contains a VdF unit, the solvent solubility of the binder in a solvent such as butyl butyrate can be improved.

The segment B may further contain a further monomer unit other than the VdF unit, in addition to the VdF unit. The further monomer may be any of a fluorine-containing monomer and a non-fluorine-containing monomer, and is preferably a fluorine-containing monomer (provided that, excluding trifluoroethylene) or a non-fluorine-containing monomer.

Examples of the fluorine-containing monomer capable of constituting the segment B together with VdF include TFE, hexafluoropropylene, perfluoro(methylvinyl ether), perfluoro(ethylvinyl ether), perfluoro(propylvinyl ether), chlorotrifluoroethylene, hexafluoroisobutene, and vinyl fluoride.

Examples of non-fluorine-containing monomer capable of constituting the segment B together with VdF include ethylene and propylene.

The segment B may further contain a unit based on a monomer having a polar group such as a carbonyl group-containing group, an epoxy group, a hydroxy group, a sulfonic acid group, a sulfuric acid group, a phosphoric acid group, an amino group, an amide group, or an alkoxy group, in addition to the VdF unit. The monomers having a polar group are as exemplified above.

Among these, the further monomer capable of constituting the segment B together with VdF is preferably at least one selected from the group consisting of TFE, hexafluoropropylene, 2,3,3,3-tetrafluoropropene, and (meth)acrylic acid.

The content of the VdF unit in the segment B is preferably 97 mol% or more, more preferably more than 99 mol%, further preferably 99.5 mol% or more, and may be 100 mol% or less, based on all monomer units constituting the segment B, from the viewpoint of being able to further improve the adhesiveness and toughness of the solid electrolyte layer or the electrode material layer, and further improving the solvent solubility of the binder in a solvent such as butyl butyrate.

The content of the further monomer unit other than the VdF unit in the segment B is preferably 3 mol% or less, more preferably less than 1 mol%, further preferably 0.5 mol% or less, and may be 0 mol% or more, based on all monomer units constituting the segment B, from the viewpoint of being able to further improve the adhesiveness and toughness of the solid electrolyte layer or the electrode material layer, and further improving the solvent solubility of the binder in a solvent such as butyl butyrate.

In one embodiment, the segment B can be formed of a VdF homopolymer containing only a VdF unit, or a copolymer containing a VdF unit and at least one further monomer unit selected from the group consisting of TFE unit, hexafluoropropylene unit, a 2,3,3,3-tetrafluoropropene unit, and a (meth)acrylic acid unit.

In the copolymer containing a VdF unit and a further monomer unit, the formulation of the VdF unit/the further monomer unit (mol%) is preferably (97.0 to 99.9)/(3.0 to 0.1).

The polymer contained in the first binder for a solid electrolyte battery may contain a further segment C having a constitution different from the segment A and the segment B, as long as the polymer contains the segment A and the segment B.

Examples of the polymer contained in the first binder for a solid electrolyte battery include block copolymers containing a chain structure represented by any of the following general formulas.

General formula: A-B

General formula: A-B-A

General formula:          B-A-B

General formula:          A-B-C

General formula:          B-A-C

In the formula, A represents the segment A, B represents the segment B, and C represents the segment C.

The polymer contained in the first binder for a solid electrolyte battery preferably contains a chain structure represented by the general formula (1) or the general formula (2), from the viewpoint of being able to form a solid electrolyte layer or an electrode material layer having superior adhesiveness, softness, and toughness, and easy production.

General formula (1):          A-B-A

General formula (2):          B-A-B

In the formula, A represents the segment A, and B represents the segment B.

For the polymer contained in the first binder for a solid electrolyte battery, the mass ratio of the segment A to the segment B, (A/B) is preferably 40/60 to 95/5, more preferably 50/50 or more, further preferably 60/40 or more, and more preferably 90/10 or less, from the viewpoint of the balance between excellent softness and excellent adhesiveness and toughness.

The number-average molecular weight (in terms of polystyrene) of the polymer contained in the first binder for a solid electrolyte battery is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The above number-average molecular weight can be measured by gel permeation chromatography (GPC) using dimethylformamide as a solvent.

The weight average molecular weight (in terms of polystyrene) of the polymer contained in the first binder for a solid electrolyte battery is preferably 50,000 to 3,000,000, more preferably 80,000 or more, further preferably 100,000 or more, further more preferably 200,000 or more, particularly preferably 500,000 or more, and more preferably 2,400,000 or less, further preferably 2,200,000 or less, particularly preferably 2,000,000 or less. The above weight average molecular weight can be measured by gel permeation chromatography (GPC) using dimethylformamide as a solvent.

The polymer contained in the first binder for a solid electrolyte battery can be produced by a production method such as:

(1) a method in which monomers capable of constituting the segment B are polymerized in the presence of a bromine compound or an iodine compound as a chain transfer agent to prepare a polymer forming the segment B, and then monomers capable of constituting the segment A are polymerized in the presence of the polymer forming the segment B to prepare a polymer forming the segment A, or

(2) a method in which monomers capable of constituting the segment A are polymerized in the presence of a bromine compound or an iodine compound as a chain transfer agent to prepare a polymer forming the segment A, and then monomers capable of constituting the segment B are polymerized in the presence of the polymer forming the segment A to prepare a polymer forming the segment B.

When the method (1) is used, a polymer in which a segment A is bonded to both ends of a polymer chain forming the segment B, that is, a polymer containing a chain structure represented by the general formula (1): A-B-A can be obtained.

When the method (2) is used, a polymer in which a segment B is bonded to both ends of a polymer chain forming the segment A, that is, a polymer containing a chain structure represented by the general formula (2): B-A-B can be obtained.

In the method (1) and the method (2), a bromine compound or an iodine compound is used as a chain transfer agent. By using a bromine compound or an iodine compound, an iodine atom or a bromine atom is introduced into the end of the polymer chain forming one segment and functions as the binding site with another segment.

Examples of the polymerization method using a bromine compound or an iodine compound include a method in which emulsion polymerization is carried out in a water medium in a substantially oxygen-free state and in the presence of a bromine compound or an iodine compound while applying pressure (iodine transfer polymerization method). Representative examples of the bromine compound or iodine compound to be used include a compound represented by:

general formula:          $R^8I_xBr_y$

wherein each of x and y is an integer of 0 to 2 and satisfies $1 \leq x + y \leq 2$, $R^8$ is a saturated or unsaturated fluorohydrocarbon group or chlorofluorohydrocarbon group having 1 to 16 carbon atoms, or a hydrocarbon group having 1 to 3 carbon atoms, and optionally contains oxygen atom.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, a monoiodomonobromo substituent of benzene, a diiodomonobromo substituent, as well as (2-iodoethyl) and (2-bromoethyl) substituents, and these compounds may be used alone, or may be used in combination with each other.

Among these, 1,4-diiodoperfluorobutane, 1,6-diiodoperfluorohexane, or 2-iodoperfluoropropane is preferably used in view of polymerization reactivity, crosslinking reactivity, easy availability, and the like.

In the above production method, polymerization of the monomer is suitably carried out using an emulsion polymerization method. In one embodiment, polymerization of the monomer is carried out in the presence of a polymerization initiator, a surfactant, and a solvent.

Examples of the polymerization initiator include an oil-soluble radical polymerization initiator or a water-soluble radical initiator.

The oil-soluble radical polymerization initiator may be a known oil-soluble peroxide, and representative examples thereof include a dialkyl peroxycarbonate such as diisopropyl peroxydicarbonate and di sec-butyl peroxydicarbonate; a peroxyester such as t-butylperoxyisobutyrate or t-butylperoxypivalate; a dialkyl peroxide such as di-t-butyl peroxide; and a di[perfluoro(or fluorochloro)acyl] peroxide such as di($\omega$-hydro-dodecafluoroheptanoyl) peroxide, di($\omega$-hydro-tetradecafluorooctanoyl) peroxide, di($\omega$-hydrohexadecafluorononanoyl) peroxide, di(perfluorobutyryl) peroxide, di(perflupareryl) peroxide, di(perfluorohexanoyl) peroxide, di(perfluoroheptanoyl) peroxide, di(perfluorooctanoyl) peroxide, di(perfluorononanoyl) peroxide, di($\omega$-chloro-hexafluorobutyryl) peroxide, di($\omega$-chloro-decafluorohexanoyl) peroxide, di($\omega$-chloro-tetradecafluorooctanoyl) peroxide, $\omega$-hydro-dodecafluoroheptanoyl-$\omega$-hydrohexadecafluorononanoyl-peroxide, $\omega$-chloro-hexafluorobutyryl-$\omega$-chloro-decafluorohexanoyl-peroxide, $\omega$-hydrododecafluoroheptanoyl-perfluorobutyryl-peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide, or di(undecachlorodotriacontafluorodocosanoyl) peroxide.

The water-soluble radical polymerization initiator may be a known water-soluble peroxide, and examples thereof include an ammonium salt, a potassium salt, a sodium salt, t-butyl permaleate, and t-butylhydro peroxide of persulfuric acid, perboric acid, perchloric acid, perphosphoric acid, and percarbonic acid. A reducing agent such as a sulfite may be contained in combination, and the amount thereof used may be 0.1 to 20 times with respect to the peroxide.

The amount of the polymerization initiator added is not limited, and the radical polymerization initiator is only required to be added in one portion in an early stage of polymerization, or successively, or continuously, in an amount such that the polymerization rate is not significantly reduced (e.g., several ppm relative to water concentration) or more. The upper limit is in the range such that the polymerization reaction heat can be removed from an apparatus surface.

The surfactant may be a nonionic surfactant, an anionic surfactant, a cationic surfactant, or the like. The amount added (relative to a solvent) is preferably 10 ppm by mass to 20% by mass, more preferably 10 ppm by mass to 10% by mass, further preferably 10 to 5,000 ppm by mass, and particularly preferably 50 to 5,000 ppm by mass.

In addition, a polymerizable emulsifier may be used as the surfactant. The polymerizable emulsifier is not limited, as long as it is a compound having one or more unsaturated bonds and one or more hydrophilic groups, and examples thereof include $CH_2=CFCF_2OCF(CF_3)CF_2OCF(CF_3)COONH_4$, $CH_2=CFCF_2CF$ $(CF_3)OCF_2CF_2COONH_4$, and $CF_2=CFOCF_2CF(CF_3)OCF(CF_3)COONH_4$. The amount added (relative to a solvent) is preferably 10 to 5,000 ppm by mass, and more preferably 50 to 5,000 ppm by mass.

The solvent is preferably a solvent having no chain transfer properties. Examples of the solvent include water, a mixture of water and a water-soluble organic solvent, or a mixture of water and a water-insoluble organic solvent.

In the polymerization of the monomer, the polymerization temperature, the polymerization pressure, and the polymerization time vary depending on the kind of the solvent and the polymerization initiator, and may be -15 to 150°C, an atmospheric pressure to 6.5 MPa, and 1 to 24 hours. When an oil-soluble radical polymerization initiator is used as the polymerization initiator, the polymerization temperature is preferably 30 to 95°C. When a water-soluble radical polymerization initiator is used as the polymerization initiator, the polymerization temperature is preferably 0 to 100°C, and more preferably 10 to 95°C.

When the polymerization of the monomer is carried out by the emulsion polymerization method, an aqueous dispersion containing the polymer is obtained. In the above production method, the polymer in the aqueous dispersion can be coagulated, washed with water, dehydrated, and dried to obtain polymer powder. Coagulation can be carried out by adding an inorganic salt such as aluminum sulfate or an inorganic acid to the dispersion, applying a mechanical shear force to the dispersion, or freezing the dispersion.

The polymer contained in the first binder for a solid electrolyte battery can also be produced using at least 2,3,3,3-tetrafluoropropene as the monomer in accordance with the methods described in Japanese Patent Laid-Open No. 53-3495 and Japanese Patent Publication No. 61-49327.

2. Second binder for a solid electrolyte battery

The second binder for a solid electrolyte battery of the present disclosure contains a polymer having a glass transition temperature and a melting point, containing a 2,3,3,3-tetrafluoropropene unit, and having an extraction in tetrahydrofuran at 25°C of 5% by mass or less.

The glass transition temperature of the polymer contained in the second binder for a solid electrolyte battery is preferably 25°C or less, more preferably 0°C or less, further preferably -5°C or less, further more preferably -10°C or less, and the lower limit may be, but is not limited to, - 40°C or more. Because the second binder for a solid-state electrolyte battery contains the polymer having a glass transition temperature, a solid-state electrolyte layer or an electrode material layer having flexibility not significantly inferior as compared with the case of using a conventional binder can be formed.

The glass transition temperature can be determined by cooling 10 mg of a sample to -75°C using a differential scanning calorimeter (DSC822e manufactured by Mettler Toledo, or X-DSC7000 manufactured by Hitachi High-Tech Science Corporation) and then raising the temperature at 20°C/min to obtain a DSC curve and defining the temperature indicating an intersection point of the extensions of the base lines before and after the secondary transition of the DSC curve and the tangent line at an inflection point of the DSC curve as the glass transition temperature.

The melting point of the polymer contained in the second binder for a solid electrolyte battery is preferably 50°C or more, more preferably 90°C or more, further preferably 140°C or more, and preferably 240°C or less, more preferably 220°C or less, further preferably 200°C or less. Because the second binder for a solid-state electrolyte battery contains the polymer having a melting point in addition to a glass transition temperature, a solid-state electrolyte layer or an electrode material layer having excellent adhesiveness and toughness can be formed without impairing excellent flexibility.

The melting point can be determined as the temperature at the peak of an endothermic curve obtained by raising the temperature of a sample at a rate of 10°C/min from 30°C to 220°C using a differential scanning calorimeter (DSC).

The extraction in tetrahydrofuran of the polymer contained in the second binder for a solid electrolyte battery is 5% by mass or less, preferably 4% by mass or less, and more preferably 3% by mass or less. Because the second binder for a solid-state electrolyte battery contains the polymer having an extraction in tetrahydrofuran within the above numerical value range, a solid-state electrolyte layer or an electrode material layer having flexibility not significantly inferior as compared with the case of using a conventional binder and excellent adhesiveness and toughness can be formed. The lower limit of the extraction in tetrahydrofuran is not limited, and may be 1% by mass or more or 2% by mass or more.

The extraction in tetrahydrofuran can be measured by a method involving immersing the polymer in tetrahydrofuran at 25°C for 24 hours and drying the filtered solution portion.

The polymer contained in the second binder for a solid electrolyte battery contains a 2,3,3,3-tetrafluoropropene unit. Because the second binder for a solid electrolyte battery contains a 2,3,3,3-tetrafluoropropene unit, the solvent solubility in a solvent such as butyl butyrate can be imparted to the binder, a solid electrolyte layer or an electrode material layer having excellent adhesiveness, softness and toughness can be formed.

The polymer contained in the second binder for a solid electrolyte battery preferably contains a fluorine-containing monomer unit (provided that, excluding the 2,3,3,3-tetrafluoropropene unit). By introducing a fluorine-containing monomer unit into the polymer, the glass transition temperature and melting point of the polymer can be easily adjusted, a solid electrolyte layer or an electrode material layer having superior adhesiveness, softness and toughness can be formed

The fluorine-containing monomer capable of constituting the polymer contained in the second binder for a solid electrolyte battery is not limited, as long as it is a monomer other than 2,3,3,3-tetrafluoropropene and the monomer contains a fluorine atom, and examples thereof include vinylidene fluoride [VdF], trifluoroethylene, tetrafluoroethylene [TFE], hexafluoropropylene, perfluoro(methylvinyl ether), perfluoro(ethylvinyl ether), perfluoro(propylvinyl ether), chlorotrifluoroethylene, hexafluoroisobutene, and vinyl fluoride.

The fluorine-containing monomer capable of constituting the polymer contained in the second binder for a solid electrolyte battery is preferably at least one selected from the group consisting of VdF, TFE, hexafluoropropylene, perfluoro(methylvinyl ether), perfluoro(ethylvinyl ether), perfluoro(propylvinyl ether), and chlorotrifluoroethylene, more preferably at least one selected from the group consisting of VdF and TFE, and is further preferably VdF.

When the polymer contained in the second binder for a solid electrolyte battery contains a VdF unit as the fluorine-containing monomer unit, the solvent solubility of the binder in a solvent such as butyl butyrate is further improved, a solid electrolyte layer or an electrode material layer having superior adhesiveness, softness and toughness can be formed by using the second binder for a solid electrolyte battery.

The content of the 2,3,3,3-tetrafluoropropene unit in the polymer contained in the second binder for a solid electrolyte battery is preferably 1 to 65 mol%, more preferably 5 mol% or more, further preferably 9 mol% or more, further more preferably 12 mol% or more, particularly preferably 14 mol% or more, and more preferably 62 mol% or less, further preferably 40 mol% or less, further more preferably 32 mol% or less, particularly preferably 24 mol% or less, based on all monomer units constituting the polymer.

The content of the fluorine-containing monomer unit in the polymer contained in the second binder for a solid electrolyte battery is preferably 99 to 35 mol%, more preferably 95 mol% or less, further preferably 91 mol% or less, further more preferably 88 mol% or less, particularly preferably 86 mol% or less, and more preferably 38 mol% or more, further preferably 60 mol% or more, further more preferably 68 mol% or more, particularly preferably 76 mol% or more, based on all monomer units constituting the polymer.

The content of the VdF unit in the polymer contained in the second binder for a solid electrolyte battery is preferably 99 to 35 mol%, more preferably 95 mol% or less, further preferably 91 mol% or less, further more preferably 88 mol% or less, particularly preferably 86 mol% or less, and more preferably 38 mol% or more, further preferably 60 mol% or more, further more preferably 68 mol% or more, particularly preferably 76 mol% or more, based on all monomer units constituting the polymer.

The polymer contained in the second binder for a solid electrolyte battery may further contain a non-fluorine-containing monomer unit. Examples of the non-fluorine-containing monomer include ethylene, propylene, and alkylvinyl ether. The content of the non-fluorine-containing monomer unit is preferably 0 to 40 mol%, more preferably 0 to 8 mol%, further preferably 0 to 1 mol%, and may be 0 mol%, based on all monomer units constituting the polymer.

The polymer contained in the second binder for a solid electrolyte battery may further contain a unit based on a monomer having a reactive group such as a cyano group, a carboxyl group, an alkoxycarbonyl group, I, Br, -CH$_2$OH, or a carbon-carbon double bond. The content of the unit based on the monomer having a reactive group is preferably 0 to 10 mol%, more preferably 0 to 2 mol%, further preferably 0 to 1 mol%, and may be 0 mol%, based on all monomer units constituting the polymer.

The polymer contained in the second binder for a solid electrolyte battery may further contain a unit based on a monomer having a polar group such as a carbonyl group-containing group, an epoxy group, a hydroxy group, a sulfonic acid group, a sulfuric acid group, a phosphoric acid group, an amino group, an amide group, or an alkoxy group.

Examples of the monomer having a polar group include a hydroxyalkyl (meth)acrylate such as hydroxyethyl acrylate or 2-hydroxypropyl acrylate; an unsaturated monobasic acid such as (meth)acrylic acid, crotonic acid, vinyl acetic acid (3-butenoic acid), 3-pentenoic acid, 4-pentenoic acid, 3-hexenoic acid, or 4-heptenoic acid; an unsaturated dibasic acid such as maleic acid, maleic anhydride, citraconic acid, or citraconic anhydride; an alkylidenemalonate ester such as dimethyl methylidenemalonate; a vinyl carboxy alkyl ether such as vinyl carboxymethyl ether or vinyl carboxyethyl ether; a carboxy alkyl (meth)acrylate such as 2-carboxyethyl acrylate or 2-carboxyethyl methacrylate; a (meth)acryloyloxyalkyl dicarboxylate ester such as acryloyloxyethyl succinate, methacryloyloxyethyl succinate, acryloyloxyethyl phthalate, acryloyloxypropyl succinate, or methacryloyloxyethyl phthalate; and a monoester of an unsaturated dibasic acid such as monomethyl maleate, monoethyl maleate, monomethyl citraconate, or monoethyl citraconate.

The content of the unit based on the monomer having a polar group is preferably 0 to 10 mol%, more preferably 0 to 2 mol%, further preferably 0 to 1 mol%, and may be 0 mol%, based on all monomer units constituting the polymer.

In one embodiment, the polymer contained in the second binder for a solid electrolyte battery contains a 2,3,3,3-tetrafluoropropene unit and a fluorine-containing monomer unit (provided that, excluding the 2,3,3,3-tetrafluoropropene unit), and the content of the monomer unit other than the 2,3,3,3-tetrafluoropropene unit and the fluorine-containing monomer unit is preferably 0 to 10 mol%, more preferably 0 to 2 mol%, further preferably 0 to 1 mol%, further more preferably 0 to 0.1 mol%, and particularly preferably 0 mol%, based on all monomer units constituting the polymer. The content of the 2,3,3,3-tetrafluoropropene unit and the content of the fluorine-containing monomer unit may be within the above range.

In one embodiment, the polymer contained in the second binder for a solid electrolyte battery contains a 2,3,3,3-tetrafluoropropene unit and a VdF unit, and the content of the monomer unit other than the 2,3,3,3-tetrafluoropropene unit and the VdF unit is preferably 0 to 10 mol%, more preferably 0 to 2 mol%, further preferably 0 to 1 mol%, further more preferably 0 to 0.1 mol%, and particularly preferably 0 mol%, based on all monomer units constituting the polymer. The content of the 2,3,3,3-tetrafluoropropene unit and the content of the VdF unit may be within the above range.

The number average molecular weight, in terms of polystyrene, of the polymer contained in the second binder for a solid electrolyte battery is preferably 20,000 to 1,500,000, more preferably 40,000 or more, further preferably 70,000 or more, particularly preferably 140,000 or more, and more preferably 1,400,000 or less, further preferably 1,200,000 or less, particularly preferably 1,100,000 or less. The number average molecular weight can be measured by gel permeation chromatography (GPC) using dimethylformamide as a solvent.

The weight average molecular weight (in terms of polystyrene) of the polymer contained in the second binder for a solid electrolyte battery is preferably 50,000 to 3,000,000, more preferably 80,000 or more, further preferably 100,000 or more, further more preferably 200,000 or more, particularly preferably 500,000 or more, and more preferably 2,400,000 or less, further preferably 2,200,000 or less, particularly preferably 2,000,000 or less. The above weight average molecular weight can be measured by gel permeation chromatography (GPC) using dimethylformamide as a solvent.

The heat of fusion of the polymer contained in the second binder for a solid electrolyte battery is preferably 1 J/g or more, more preferably 3 J/g or more, further preferably 5 J/g or more, further more preferably 8 J/g or more, and preferably 40 J/g or less, more preferably 30 g/g or less, further preferably 20 J/g or less.

In one embodiment, the polymer contained in the second binder for a solid electrolyte battery contains two or more segments. By constituting the polymer using two or more segments, a glass transition temperature and a melting point can be easily imparted to the polymer, the glass transition temperature and melting point of the polymer can be easily adjusted, and the adhesiveness, softness, and toughness of the solid electrolyte layer or electrode material layer can be further improved.

When the polymer contained in the second binder for a solid electrolyte battery contains two or more segments, the constitution of each segment may be the same as the constitution of each segment of the polymer contained in the first binder for a solid electrolyte battery. That is, the polymer contained in the second binder for a solid electrolyte battery can contain the segment A and the segment B as in the polymer contained in the first binder for a solid electrolyte battery, and may have the same constitution as the polymer contained in the first binder for a solid electrolyte battery.

The polymer contained in the second binder for a solid electrolyte battery can be produced by, for example, the method described above as the method for producing the polymer contained in the first binder for a solid electrolyte battery.

The first binder for a solid electrolyte battery and the second binder for a solid electrolyte battery (hereinafter simply referred to as the "binder for a solid electrolyte battery") may contain a further polymer other than the above polymer. Examples of the further polymer include a fluoropolymer, polymethacrylate, polymethyl methacrylate, polyacrylonitrile, polyimide, polyamide, polyamideimide, polycarbonate, styrene elastomer, butadiene elastomer, styrene-butadiene elastomer, and polyacrylic acid.

The binder for a solid electrolyte battery of the present disclosure can be suitably used as a material for forming a battery such as a secondary battery or a capacitor.

The present disclosure also relates to use of a binder containing a polymer containing a segment A having a glass transition temperature of 25°C or less and a segment B having a melting point of 50°C or more, to form a solid electrolyte battery. The binder can be particularly suitably used to form a solid-state electrolyte layer or an electrode material layer of a solid-state electrolyte battery.

The present disclosure also relates to use of a binder containing a polymer having a glass transition temperature and a melting point, containing a 2,3,3,3-tetrafluoropropene unit, and having an extraction in tetrahydrofuran at 25°C of 5% by mass or less, to form a solid electrolyte battery. The binder can be particularly suitably used to form a solid-state electrolyte layer or an electrode material layer of a solid-state electrolyte battery.

The solid-state electrolyte battery may be a primary battery, or may be a storage battery (secondary battery) or an energy storage element. The solid-state electrolyte battery is preferably an all solid-state lithium ion secondary battery using an inorganic solid-state electrolyte. Examples of the solid-state electrolyte battery include oxide-based solid-state batteries and sulfide-based solid-state batteries. The binder for a solid-state electrolyte battery of the present disclosure can be particularly suitably used as a binder for a solid-state battery using an inorganic solid-state electrolyte such as a sulfide-based solid-state battery. The sulfide-based solid-state battery is preferably an all solid-state lithium ion secondary battery using a sulfide-based solid-state electrolyte as the electrolyte.

3. Slurry

The slurry for a solid-state electrolyte battery of the present disclosure contains the above binder for a solid-state electrolyte battery, a solid-state electrolyte, and a solvent. Because the slurry of the present disclosure contains the above binder for a solid-state electrolyte battery, a solid-state electrolyte layer or an electrode material layer having flexibility not significantly inferior as compared with the case of using a conventional binder and excellent adhesiveness and toughness can be formed.

The slurry for a solid-state electrolyte battery of the present disclosure is used to form a layer containing a solid-state electrolyte. The slurry for a solid-state electrolyte battery of the present disclosure can be used to form a positive electrode material layer containing a solid-state electrolyte, a solid-state electrolyte layer containing a solid-state electrolyte, or a negative electrode material layer containing a solid-state electrolyte.

The slurry for a solid-state electrolyte battery of the present disclosure contains a solid-state electrolyte, and suitably contains an inorganic solid-state electrolyte. As the solid-state electrolyte, a solid-state electrolyte that can absorb and release alkali metal ions such as lithium ions can be used. Examples of the solid-state electrolyte include a sulfide-based solid-state electrolyte, an oxide-based solid-state electrolyte, and a crystalline oxide or oxynitride. Among these, the slurry for a solid-state electrolyte battery preferably contains a sulfide-based solid-state electrolyte.

The sulfide-based solid-state electrolyte is not limited, as long as it is a solid-state electrolyte containing a sulfur atom, and examples thereof include $Li_2S$-$P_2S_5$, $Li_2S$-$P_2S_3$, $Li_2S$-$P_2S_3$-$P_2S_5$, $Li_2S$-$SiS_2$, $LiI$-$Li_2S$-$SiS_2$, $LiI$-$Li_2S$-$P_2S_5$, $LiI$-$Li_2S$-$P_2O_5$, $LiI$-$Li_3PO_4$-$P_2S_5$, $LiI$-$Li_2S$-$SiS_2$-$P_2S_5$, $Li_2S$-$SiSr$-$Li_4SiO_4$, $Li_2S$-$SiS_2$-$Li_3PO_4$, $Li_3PS_4$-$Li_4GeS_4$, $Li_{3.4}P_{0.6}Si_{0.4}S_4$,

$Li_{3.25}P_{0.25}Ge_{0.76}S_4$, and $Li_{4-x}Ge_{1-x}P_xS_4$.

Examples of the oxide-based solid-state electrolyte include LiPON (phosphorus-lithium oxynitride), $Li_2O$-$B_2O_3$-$P_2O_5$, $Li_2O$-$SiO_2$, $Li_{1.3}Al_{0.3}Ti_{0.7}(PO_4)_3$, $La_{0.51}Li_{0.54}TiO_{0.74}$, $Li_3PO_4$, $Li_2SiO_2$, $Li_2SiO_4$, $Li_{0.5}La_{0.5}TiO_3$, and $Li_{1.5}Al_{0.5}Ge_{1.5}(PO_4)_3$.

Examples of the crystalline oxide or oxynitride include LiI, $Li_3N$, $Li_5La_3Ta_2O_{12}$, $Li_7La_3Zr_2O_{12}$, $Li_6BaLa_2Ta_2O_{12}$, $Li_3PO_{(4-3/2w)}N_w$ (w < 1), and $Li_{3.6}Si_{0.6}P_{0.4}O_4$.

The slurry for a solid-state electrolyte battery of the present disclosure contains a solvent. The solvent is preferably a low-polar solvent. It is preferable because use of a low-polar solvent makes the reaction of the solvent with the sulfide-based solid-state electrolyte hardly occur. In the present disclosure, the low-polar solvent is defined to one having a ratio dielectric constant at a frequency of 100 kHz of less than 20, and further preferably less than 10.

The solvent preferably contains at least one compound selected from the group consisting of an aromatic compound, an ester compound, an aliphatic hydrocarbon compound, an ether compound, and a carbonate compound. It is preferably an aromatic compound or an ester compound, and most preferably an ester compound.

The low-polar solvent is not limited, and examples thereof include n-octane, n-nonane, n-decane, n-butyl ether, diisopentyl ether, ethylbenzene, ethyl acetate, ethyl butyrate, butyl butyrate, propyl propionate, butyl methacrylate, dimethyl carbonate, diethyl carbonate, methyl phenyl ether, cyclopentyl methyl ether, ethylene carbonate, diphenyl ether, fluorobenzene, trifluoromethyl benzene, bistrifluoromethyl benzene, benzene, and thiol.

Among these, at least one solvent selected from the group consisting of propyl propionate, butyl methacrylate, ethyl acetate, ethyl butyrate, and butyl butyrate can be more suitably used as the solvent. A mixed solvent using two or more of these in combination may be used.

The slurry for a solid-state electrolyte battery of the present disclosure preferably further contains a conductive aid. Examples of the conductive aid include carbon black such as acetylene black and ketjen black; carbon fibers such as multi-walled carbon nanotube, single-walled carbon nanotube, carbon nanofibers, and vapor grown carbon fibers (VGCF); and metal powder such as SUS powder and aluminum powder.

The slurry for a solid-state electrolyte battery of the present disclosure can further contain an electrode active material. The electrode active material may be either a positive electrode active material or a negative electrode active material.

Examples of the positive electrode active material include $LiCoO_2$, $Li(Ni,Co,Al)O_2$, $Li_{1+x}Ni_{1/3}Mn_{1/3}Co_{1/3}O_2$ (x is a real number of 0 or more), $LiNiO_2$, $LiMn_2O_4$, $LiCoMnO_4$, $Li_2NiMn_3O_8$, $Li_3Fe_2(PO_4)_3$, $Li_3V_2(PO_4)_3$, a different element-substituted Li-Mn spinel having a composition represented by $Li_{1+x}Mn_{2-x-y}M_yO_4$ (M is at least one metal selected from the group consisting of Al, Mg, Co, Fe, Ni, and Zn, and y is a real number of 0 or more), lithium titanate ($Li_xTiO_y$), and a lithium metal phosphate having a composition represented by $LiMPO_4$ (M is Fe, Mn, Co, or Ni).

Among these, the positive electrode active material is preferably $LiCoO_2$, $Li(Ni,Co,Al)O_2$, or $Li$-$Ni_{1/3}Mn_{1/3}CO_{1/3}O_2$. In the present disclosure, positive electrode active materials obtained by coating the surface of each of these materials may be used. The coating material that can be used in the present disclosure is only required to have lithium ion conductivity and may contain a substance capable of maintaining the form of a coating layer on the surface of the active material. Examples of the coating material include $LiNbO_3$, $Li_4Ti_5O_{12}$, and $Li_3PO_4$. The form of the positive electrode active material is not limited, and is preferably powder form.

The average particle size of the positive electrode active material is, for example, preferably 1 to 50 $\mu$m, especially preferably 1 to 20 $\mu$m, and particularly preferably 3 to 7 $\mu$m. This is because, when the average particle size of the positive electrode active material is too small, handleability may deteriorate, and when the average particle size of the positive electrode active material is too large, it may be difficult to obtain a flat positive electrode material layer. The average particle size of the positive electrode active material can be determined by, for example, measuring the particle sizes of active material carriers observed with a scanning electron microscope (SEM) and averaging the measurement results.

Examples of the negative electrode active material include any one or a mixture of two or more of those containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor grown carbon fiber, natural graphite, and non-graphitized carbon; silicon-containing compounds such as silicon and silicon alloys, and $Li_4Ti_5O_{12}$. Among these, those at least partially containing a carbonaceous material and silicon-containing compounds can be particularly suitably used.

The content of the binder in the slurry for a solid-state electrolyte battery of the present disclosure is preferably 0.5 to 4.5 parts by mass per 100 parts by mass of the solid content of the slurry for a solid-state electrolyte battery.

The solid concentration of the slurry for a solid-state electrolyte battery of the present disclosure is preferably 20 to 75% by mass, and more preferably 30 to 70% by mass.

Examples of the method for preparing the slurry for a solid-state electrolyte battery include a method in which a solid-state electrolyte and optionally an electrode active material are dispersed and mixed in a solution or dispersion obtained by dissolving or dispersing a binder in a solvent. The slurry for a solid-state electrolyte battery may be prepared by preliminarily mixing a binder and a solid-state electrolyte and then adding a solvent.

(Solid electrolyte layer)

The slurry for a solid-state electrolyte battery of the present disclosure can be used to form a solid-state electrolyte layer of a solid-state electrolyte battery. The solid-state electrolyte layer can be created by, for example, coating a transfer sheet with the slurry for a solid-state electrolyte battery, drying the coating film obtained, installing the transfer sheet on an electrode material layer so that the coating film surface is in contact therewith, pressing them, and peeling the transfer sheet.

Examples of the coating method of the transfer sheet with the slurry for a solid-state electrolyte battery include spraying, screen printing, doctor blading, bar coating, roll coating, gravure printing, and die coating. Examples of the drying method include drying under reduced pressure, heat drying, and heat drying under reduced pressure. Specific conditions for drying under reduced pressure and heat drying are not limited and are only required to be appropriately set.

4. Electrode

The slurry for a solid-state electrolyte battery of the present disclosure can be used to form electrode material layers such as a positive electrode material layer and a negative electrode material layer. The electrode for a solid-state electrolyte battery of the present disclosure includes an electrode material layer formed of the above slurry for a solid-state electrolyte battery. The electrode for a solid-state electrolyte battery of the present disclosure can be used as a positive electrode or a negative electrode.

The electrode of the present disclosure may be an electrode including only an electrode material layer formed of the above slurry for a solid-state electrolyte battery, or an electrode including a current collector and an electrode material layer formed of the above slurry for a solid-state electrolyte battery. The electrode material layer is formed using the slurry for a solid-state electrolyte battery of the present disclosure, and may be provided on one side or both sides of the current collector.

The thickness of the electrode material layer varies depending on the applications of the target solid-state electrolyte battery and the like, and is preferably 10 to 250 $\mu$m, more preferably 20 to 200 $\mu$m, and further preferably 30 to 150 $\mu$m.

Examples of the material of the current collector include aluminum, stainless (SUS), nickel, iron, titanium, chrome, gold, platinum, and zinc, and above all, aluminum and stainless (SUS) are preferable. Examples of the shape of the current collector include a foil, a plate, and a mesh, and above all, a foil is preferable.

The electrode can be created by, for example, coating a current collector with the above slurry for a solid-state electrolyte battery, and drying the obtained coating film. Examples of the coating method include spraying, screen printing, doctor blading, bar coating, roll coating, gravure printing, and die coating. Examples of the drying method include drying under reduced pressure, heat drying, and heat drying under reduced pressure. Specific conditions for drying under reduced pressure and heat drying are not limited and are only required to be appropriately set.

The amount of the slurry for a solid-state electrolyte battery coated varies depending on the composition of the slurry for a solid-state electrolyte battery, the applications of the target electrode, and the like, and is about 5 to 30 mg/cm$^2$ in a dried state. The thickness of the electrode is not limited, and is about 10 to 250 $\mu$m.

5. Solid electrolyte battery

In one embodiment, the solid-state electrolyte battery of the present disclosure includes a positive electrode material layer, a negative electrode material layer, and a solid-state electrolyte layer formed between the positive electrode material layer and the negative electrode material layer. In one embodiment, the solid-state electrolyte battery of the present disclosure includes a positive electrode including a positive electrode material layer and a current collector, a negative electrode including a negative electrode material layer and a current collector, and a solid-state electrolyte layer formed between the positive electrode and the negative electrode. In the solid-state electrolyte battery of the present disclosure, at least one of the positive electrode material layer, the negative electrode material layer, and the solid-state electrolyte layer is formed of the slurry for a solid-state electrolyte battery of the present disclosure.

The solid-state electrolyte battery may be a primary battery, or may be a storage battery (secondary battery) or an energy storage element. The solid-state electrolyte battery is preferably an all solid-state lithium ion secondary battery using an inorganic solid-state electrolyte. Examples of the solid-state electrolyte battery include oxide-based solid-state batteries and sulfide-based solid-state batteries. The sulfide-based solid-state battery is preferably an all solid-state lithium ion secondary battery using a sulfide-based solid-state electrolyte as the electrolyte.

The solid-state electrolyte battery of the present disclosure may include a separator between the positive electrode and the negative electrode. Examples of the above separator include a porous film such as polyethylene and polypropylene; and non-woven fabric such as non-woven fabric made of resin such as polypropylene, and glass fiber non-woven fabric.

The solid-state electrolyte battery of the present disclosure may further include a battery case. The shape of the battery case is not limited, as long as the case can store the above positive electrode, negative electrode, solid-state electrolyte layer, and the like, and examples thereof include cylinder, square, coin, and laminate shapes.

The solid-state electrolyte layer of the present disclosure has excellent adhesiveness, flexibility, and toughness, and thus can be suitably used as a solid-state electrolyte layer for a solid-state electrolyte battery. In addition, the electrode for a solid-state electrolyte battery of the present disclosure includes an electrode material layer having excellent adhesiveness, flexibility, and toughness, and thus can be suitably used as an electrode for a solid-state electrolyte battery.

The embodiments have been described above, and it will be understood that various modifications of the embodiments and details are possible without departing from the spirit and scope of the claims.

<1> According to a first aspect of the present disclosure,
provided is a binder for a solid-state electrolyte battery, comprising a polymer comprising a segment A having a glass transition temperature of 25°C or less and a segment B having a melting point of 50°C or more.
<2> According to a second aspect of the present disclosure,
provided is the binder for a solid-state electrolyte battery according to the first aspect, wherein the segment A has a heat of fusion of less than 5 J/g, and the segment B has a heat of fusion of 5 J/g or more.
<3> According to a third aspect of the present disclosure,
provided is the binder for a solid-state electrolyte battery according to the first or second aspect, wherein the polymer includes a chain structure represented by a general formula (1) or a general formula (2):

General formula (1):        A-B-A

General formula (2):        B-A-B

wherein A represents the segment A, and B represents the segment B.
<4> According to a fourth aspect of the present disclosure,
provided is the binder for a solid electrolyte battery according to any one of the first to third aspects, wherein the segment A of the polymer comprises a fluorine-containing monomer unit.
<5> According to a fifth aspect of the present disclosure,
provided is the binder for a solid electrolyte battery according to any one of the first to fourth aspects, wherein the segment A of the polymer comprises vinylidene fluoride unit.
<6> According to a sixth aspect of the present disclosure,
provided is the binder for a solid electrolyte battery according to any one of the first to fifth aspects, wherein the segment A of the polymer comprises vinylidene fluoride unit and at least one selected from the group consisting of repeating units represented by any of the following formulas:

Formula:        $-CF_2-CF[-CF_3]-$

Formula:        $-CH_2-CFRf^1-$

wherein $Rf^1$ is a linear or branched fluorinated alkyl group or fluorinated alkoxy group having 1 to 12 carbon atoms, and, when the number of carbon atoms is 2 or more, optionally includes oxygen atom between carbon atoms thereof,

Formula:        $-CHF-CHRf^2-$

wherein $Rf^2$ is a linear or branched fluorinated alkyl group or fluorinated alkoxy group having 1 to 12 carbon atoms, and, when the number of carbon atoms is 2 or more, optionally includes oxygen atom between carbon atoms thereof.
<7> According to a seventh aspect of the present disclosure,
provided is the binder for a solid electrolyte battery according to any one of the first to sixth aspects, wherein the segment A of the polymer comprises vinylidene fluoride unit and 2,3,3,3-tetrafluoropropene unit.
<8> According to an eighth aspect of the present disclosure,
provided is the binder for a solid electrolyte battery according to any one of the fifth to seventh aspects, wherein a content of vinylidene fluoride unit in the segment A of the polymer is 99 to 15 mol% based on all monomer units constituting the segment A.
<9> According to a ninth aspect of the present disclosure,
provided is the binder for a solid electrolyte battery according to any one of the first to eighth aspects, wherein the segment B of the polymer includes a fluorine-containing monomer unit.
<10> According to a tenth aspect of the present disclosure,

provided is the binder for a solid electrolyte battery according to any one of the first to ninth aspects, wherein the segment B of the polymer comprises vinylidene fluoride unit.

<11> According to an eleventh aspect of the present disclosure,

provided is the binder for a solid electrolyte battery according to the tenth aspect, wherein a content of vinylidene fluoride unit in the segment B of the polymer is 97 mol% or more based on all monomer units constituting the segment B.

<12> According to a twelfth aspect of the present disclosure,

provided is the binder for a solid electrolyte battery according to any one of the first to eleventh aspects, wherein the segment B of the polymer includes

only vinylidene fluoride unit, or
vinylidene fluoride unit and at least one monomer unit selected from the group consisting of tetrafluoroethylene unit, hexafluoropropylene unit, 2,3,3,3-tetrafluoropropene unit, and (meth)acrylic acid unit.

<13> According to a thirteenth aspect of the present disclosure,

provided is the binder for a solid electrolyte battery according to any one of the first to twelfth aspects, wherein a mass ratio of the segment A to the segment B (A/B)in the polymer is 40/60 to 95/5.

<14> According to a fourteenth aspect of the present disclosure,

provided is the binder for a solid electrolyte battery according to any one of the first to thirteenth aspects, wherein the polymer includes a chain structure represented by a general formula (1) or a general formula (2):

General formula (1):          A-B-A

General formula (2):          B-A-B

wherein A represents the segment A, and B represents the segment B,
the segment A of the polymer has a glass transition temperature of -10°C or less, and comprises vinylidene fluoride unit and 2,3,3,3-tetrafluoropropene unit, wherein a content of the 2,3,3,3-tetrafluoropropene unit in the segment A is 18 to 30 mol% based on all monomer units constituting the segment A, and a content of vinylidene fluoride unit in the segment A is 70 to 82 mol% based on all monomer units constituting the segment A,
the segment B of the polymer has a melting point of 140 to 200°C, and includes vinylidene fluoride unit, wherein a content of vinylidene fluoride unit in the segment B is 97 mol% or more based on all monomer units constituting the segment B,
a mass ratio of the segment A to the segment B in the polymer is 50/50 to 90/10, and
a weight average molecular weight of the polymer is 200,000 to 2,000,000.

<15> According to a fifteenth aspect of the present disclosure,

provided is a binder for a solid electrolyte battery, including a polymer, wherein the polymer has a glass transition temperature and a melting point, includes a 2,3,3,3-tetrafluoropropene unit, and has an extraction in tetrahydrofuran at 25°C of 5% by mass or less.

<16> According to a sixteenth aspect of the present disclosure,

provided is the binder for a solid electrolyte battery according to the fifteenth aspect, wherein the polymer further comprises vinylidene fluoride unit.

<17> According to a seventeenth aspect of the present disclosure,

provided is the binder for a solid electrolyte battery according to the fifteenth or sixteenth aspect, wherein the polymer comprises two or more segments.

<18> According to an eighteenth aspect of the present disclosure,

provided is the binder for a solid electrolyte battery according to any one of the fifteenth to seventeenth aspects, wherein
the glass transition temperature of the polymer is -10°C or less,
the melting point of the polymer is 140 to 200°C,
the polymer comprises vinylidene fluoride unit and 2,3,3,3-tetrafluoropropene unit, wherein a content of 2,3,3,3-tetrafluoropropene unit is 9 to 24 mol% based on all monomer units constituting the polymer, and a content of vinylidene fluoride unit is 76 to 91 mol% based on all monomer units constituting the polymer,
the extraction in tetrahydrofuran at 25°C of the polymer is 2 to 4% by mass, and

a weight average molecular weight of the polymer is 200,000 to 2,000,000.

<19> According to a nineteenth aspect of the present disclosure,
provided is a slurry for a solid-state electrolyte battery, comprising the binder for a solid-state electrolyte battery according to any one of the first to eighteenth aspects, a solid-state electrolyte, and a solvent.
<20> According to a twentieth aspect of the present disclosure,
provided is the slurry for a solid-state electrolyte battery according to the nineteenth aspect, further comprising an electrode active material.
<21> According to a twenty-first aspect of the present disclosure,
provided is an electrode for a solid-state electrolyte battery, comprising an electrode material layer formed of the slurry for a solid-state electrolyte battery according to the nineteenth or twentieth aspect.
<22> According to a twenty-second aspect of the present disclosure,
provided is a solid-state electrolyte battery comprising the electrode according to the twenty-first aspect.
<23> According to a twenty-third aspect of the present disclosure,
provided is a solid-state electrolyte battery comprising a solid-state electrolyte layer formed of the slurry for a solid-state electrolyte battery according to the nineteenth or twentieth aspect.

Examples

Next, the embodiments of the present disclosure will be described with reference to Examples, but the present disclosure is not limited only to the Examples.
The numerical values in Examples were measured by the following methods.

<Polymer formulation>

The formulation of a fluorine-containing copolymer was measured by a solution NMR method.

Measuring apparatus: VNMRS400 manufactured by Varian, Inc.
Resonance frequency: 376.04 (Sfrq)
Pulse width: 30° (pw = 6.8)

<Glass transition temperature (Tg)>

Using a differential scanning calorimeter (DSC822e manufactured by Mettler Toledo, or X-DSC7000 manufactured by Hitachi High-Tech Science Corporation), the temperature of 10 mg of a sample was raised at 20°C/min to obtain a DSC curve, and the temperature indicating an intersection point of the extensions of the base lines before and after the secondary transition of the DSC curve and the tangent line at an inflection point of the DSC curve was defined as the glass transition temperature.

<Heat of fusion>

Using a differential scanning calorimeter (DSC822e manufactured by Mettler Toledo, or X-DSC7000 manufactured by Hitachi High-Tech Science Corporation), the temperature of a sample was raised from 30°C to 220°C at 10°C/min, and the heat of fusion was calculated from the magnitude of the melting peak ($\Delta H$) of the obtained endothermic curve.

<Weight average molecular weight>

The molecular weight was calculated in terms of standard polystyrene based on the results measured by the GPC method.

GPC apparatus: TOSOH HLC-8320GPC
Column: one SuperAW-H, three SuperAWM-H
Developing solvent: dimethylformamide [DMF]
Sample concentration: 0.05% by mass
Measurement temperature: 40°C

<Melting point>

The melting point was determined as the temperature corresponding to the peak of an endothermic curve obtained by raising the temperature of a sample at a rate of 10°C/min from 30°C to 220°C using a differential scanning calorimeter (DSC).

<Extraction in THF>

To 1 g of each polymer obtained in each Example, 9 g of tetrahydrofuran (THF) was added, and the mixture was stirred at 25°C with a stirrer. The solid was filtered after 24 hours, the solution was dried, and the weight of the dried product was measured to calculate the extraction (the proportion of the weight of the dried product to the weight (1 g) of the polymer (% by mass)).

<Maximum test force>

Bending strength (3-point bending test) was measured by a method according to ASTM D790. A positive electrode including a positive electrode material layer on one side or a negative electrode including a negative electrode material layer on one side or a solid-state electrolyte layer-containing laminate was cut into a size of 15 mm × 20 mm to prepare a test piece. According to the 3-point bending method, the test piece was disposed between a first point and a second point, which were 10 mm apart, and the center (third point) of the test piece was pushed at a constant speed in the test piece thickness direction using a probe to carry out a bending property test. The force applied while causing the probe to travel at a travel speed of 5 mm/min in the thickness direction at the third point was measured. The maximum bending force or maximum bending strength is the maximum value of the force applied to the test piece depending on the distance traveled by the probe. Relative evaluation was made by taking Comparative Examples as 100.

<Half width>

Bending strength (3-point bending test) was measured by a method according to ASTM D790. A positive electrode including a positive electrode material layer on one side or a negative electrode including a negative electrode material layer on one side or a solid electrolyte layer-containing laminate was cut into a size of 15 mm × 20 mm to prepare a test piece. According to the 3-point bending method, the test piece was disposed between a first point and a second point, which were 10 mm apart, and the center (third point) of the test piece was pushed at a constant speed in the test piece thickness direction using a probe to carry out a bending property test. The force applied while causing the probe to travel at a travel speed of 5 mm/min in the thickness direction at the third point was measured. The maximum bending force or maximum bending strength is the maximum value of the force applied to the test piece depending on the distance traveled by the probe. Then, the test force half the maximum bending strength is calculated, and the half width refers to a distance from a stroke at which the test force reached the test force half the maximum bending strength for the first time when the test force increased after the start of the test to a stroke at which the test force reached the test force half the maximum bending strength after the test force reached the maximum test force and then decreased. That is, when a curve is drawn by taking the stroke of the autograph as an abscissa and the stress as an ordinate, the half-width is specified as the peak width at a stress half the peak of the stress. Relative evaluation was made by taking Comparative Examples as 100.

<Adhesiveness>

Adhesiveness was evaluated by subjecting the interface of the electrode material layer/the current collector to a 90-degree peeling test. In the 90-degree peeling test, the electrode material layer side of a positive electrode or a negative electrode cut into 1.2 × 8.0 cm was fixed on a movable jig, a tape is affixed to the current collector side, and the stress (N/mm) when the tape was pulled at 90 degree at a rate of 100 mm/minute was measured with an autograph. The load cell in the autograph used was 1 N. Relative evaluation was made by taking Comparative Examples as 100.

In Examples and Comparative Examples, the following polymers were used.

Production Example 1 Fluorine-containing copolymer a (Production of a B-A-B block polymer, wherein A represents a segment A and B represents a segment B.)

(Step 1)

4,000 ml of pure water, 0.8001 g of a 50% aqueous solution of $CH_2=CFCF_2OCF(CF_3)CF_2OCF(CF_3)COONH_4$, and 24.021 g of a 50% aqueous solution of $C_5F_{11}COONH_4$ were placed in a 6 L stainless steel autoclave, the autoclave was purged with nitrogen and slightly pressurized with VdF, the temperature thereof was adjusted to 80°C while stirring at 400 rpm, VdF was injected under pressure to 1.64 MPa, and further a mixed solution monomer of VdF and 2,3,3,3-tetrafluoropropylene (R1234yf) at a molar ratio of 77.2/22.8 was injected under pressure to 2.001 MPa. 0.16 g of ammonium persulfate dissolved in 4 ml of pure water was injected under nitrogen pressure to start polymerization. When 24 g of the mixed solution monomer was reached, 1.009 g of 1,4-diiodoperfluorobutane was added. When the pressure dropped to 1.98 MPa, the pressure was increased to 2.01 MPa with the mixed solution monomer. This operation was repeated, and when 1,020 g of the mixed solution monomer was fed, the autoclave was vented to 0.05 MPa, and then the dispersion was subjected to heat treatment for 3 hours. 10 g of the dispersion in the autoclave was sampled and dried to obtain a polymer. The polymer had a formulation of VdF/R1234yf = 77.6/22.4 in a molar ratio, had a glass transition temperature of -12.5°C, and had no heat of fusion.

(Step 2)

After the heat treatment in step 1, VdF was injected under pressure to 2.003 MPa while maintaining the temperature in the autoclave at 80°C, 0.08 g of ammonium persulfate dissolved in 4 ml of pure water was injected under nitrogen pressure to start polymerization. When the pressure dropped to 1.98 MPa, the pressure was increased to 2.01 MPa with VdF. This operation was repeated, and when 180 g of VdF was fed, the autoclave was vented and cooled to recover 5,270 g of a dispersion. The solid content of the dispersion was 23.83% by mass.

Aluminum sulfate was added to this dispersion to cause coagulation, and the resulting coagulated product was dried to obtain 1,250 g of a polymer. The obtained block polymer had a formulation of VdF/R1234yf = 82.0/18.0 in a molar ratio, and had a content of the segment B determined from the formulation of 17.2% by mass. The weight average molecular weight Mw thereof was 1,266,000, the glass transition temperature was - 12.9°C, the melting point was 160.3°C, and the heat of fusion was 8.2 mJ/mg. The extraction in THF was 3% by mass.

Production Example 2 Fluorine-containing copolymer b (Production of a B-A-B block polymer, wherein A represents a segment A and B represents a segment B.)

5,236 g of a dispersion was recovered in the same manner as in Production Example 1, except that the amount of the mixed solution monomer fed in step 1 was changed from 1,020 g to 900 g and the amount of VdF fed in step 2 was changed from 180 g to 300 g. The solid content of the dispersion was 24.10% by mass.

Aluminum sulfate was added to this dispersion to cause coagulation, and the resulting coagulated product was dried to obtain 1,257 g of a polymer. The obtained block polymer had a formulation of VdF/R1234yf = 84.2/15.8 in a molar ratio, and had a content of the segment B determined from the formulation of 28.1% by mass. The weight average molecular weight Mw thereof was 1,206,000, the glass transition temperature was - 11.0°C, the melting point was 161.1°C, and the heat of fusion was 11.0 mJ/mg. The extraction in THF was 3%.

Production Example 3 Fluorine-containing copolymer c (Production of a B-A-B block polymer, wherein A represents a segment A and B represents a segment B.)

5,252 g of a dispersion was recovered in the same manner as in Production Example 1, except that the amount of the mixed solution monomer fed in step 1 was changed from 1,020 g to 780 g and the amount of VdF fed in step 2 was changed from 180 g to 420 g. The solid content of the dispersion was 23.74 % by mass.

Aluminum sulfate was added to this dispersion to cause coagulation, and the resulting coagulated product was dried to obtain 1,250 g of a polymer. The obtained block polymer had a formulation of VdF/R1234yf = 85.9/14.1 in a molar ratio, and had a content of the segment B determined from the formulation of 36.0% by mass. The weight average molecular weight Mw thereof was 1,290,000, the glass transition temperature was - 11.2°C, the melting point was 161.4°C, and the heat of fusion was 17.1 mJ/mg. The extraction in THF was 3%.

Production Example 4 Fluorine-containing copolymer d (Production of an B-A-B block polymer, wherein A represents a segment A and B represents a segment B.)

(Step 1)

4,000 ml of pure water, 0.8003 g of a 50% aqueous solution of $CH_2=CFCF_2OCF(CF_3)CF_2OCF(CF_3)COONH_4$, and 24.014 g of a 50% aqueous solution of $C_5F_{11}COONH_4$ were placed in a 6 L stainless steel autoclave, the autoclave was purged with nitrogen and slightly pressurized with VdF, the temperature thereof was adjusted to 80°C while stirring at 400 rpm, and VdF was injected under pressure to 2.00 MPa. 0.16 g of ammonium persulfate dissolved in 4 ml of pure water was injected under nitrogen pressure to start polymerization. When 24 g of VdF was reached, 1.009 g of 1,4-diiodoperfluorobutane was added. When the pressure dropped to 1.98 MPa, the pressure was increased to 2.01 MPa with VdF. This operation was repeated, and when 300 g of VdF was fed, the autoclave was vented to 0.05 MPa, and then the dispersion was subjected to heat treatment for 3 hours. 10 g of the dispersion in the autoclave was sampled and dried to obtain a polymer. The glass transition temperature thereof was not observed, the melting point was 161.1°C, and the heat of fusion was 44.8 mJ/mg.

(Step 2)

After the heat treatment in step 1, VdF was injected under pressure to 1.64 MPa and a mixed solution monomer of VdF and R1234yf at a molar ratio of 77.5/22.5 was injected under pressure to 2.001 MPa while maintaining the temperature in the autoclave at 80°C, and 0.08 g of ammonium persulfate dissolved in 4 ml of pure water was injected under nitrogen pressure to start polymerization. When the pressure dropped to 1.98 MPa, the pressure was increased to 2.01 MPa with the mixed solution monomer. This operation was repeated, and when 900 g of the mixed solution monomer was fed, the autoclave was vented and cooled to recover 5,271 g of a dispersion. The solid content of the dispersion was 23.80% by mass.

Aluminum sulfate was added to this dispersion to cause coagulation, and the resulting coagulated product was dried to obtain 1,248 g of a polymer. The obtained block polymer had a formulation of VdF/R1234yf = 82.7/17.3 in a molar ratio, and had a content of the segment B determined from the formulation of 24.1wt%. The weight average molecular weight Mw thereof was 1,426,000, the glass transition temperature was -10.4°C, the melting point was 160.8°C, and the heat of fusion was 10.8 mJ/mg. The extraction in THF was 3% by mass.

Production Example 5 Fluorine-containing copolymer e

A fluoroelastomer in which VdF/R1234yf was 78.6/21.4 in a molar ratio was obtained according to the production method described in Example 12 in Japanese Patent Laid-Open No. 2013-216915. The fluoroelastomer had no heat of fusion. The extraction in THF was 100% by mass.

Examples 1 to 12 and Comparative Examples 1 to 3

(Preparation of binder solution)

Each polymer described in Table 1 was added to butyl butyrate as the binder, and the mixture was stirred at 50°C overnight and then repeatedly subjected to ultrasonication (90 seconds) three times using an ultrasonic homogenizer to prepare each binder solution. Here, 5% by mass of the binder was contained based on the total binder solution of 100% by mass.

In the present disclosure, the slurry for a positive electrode or a negative electrode and the solid-state electrolyte layer were created by the following procedure.

(1) The binder solution obtained by the above method and an active material (positive electrode active material or negative electrode active material) or sulfide-based solid-state electrolyte separately prepared are added to butyl butyrate, and the mixture is subjected to dispersion treatment (e.g., ultrasonication) to obtain a "positive electrode active material-binder slurry", "negative electrode active material-binder slurry" or "solid-state electrolyte-binder slurry" in which the active material or the sulfide-based solid-state electrolyte and the binder are highly dispersed in the low polar solvent.

(2) To the "positive electrode active material-binder slurry", "negative electrode active material-binder slurry", or "solid-state electrolyte-binder slurry" obtained in (1), a sulfide-based solid-state electrolyte or an active material (a positive electrode active material or a negative electrode active material) was added, and the mixture is subjected to dispersion treatment (e.g., ultrasonication) to obtain a "slurry for a positive electrode" or "slurry for a negative electrode" in which the active material, the sulfide-based solid-state electrolyte, and the binder are highly dispersed in the solvent. More specific preparation methods are described below.

(Preparation of slurry for negative electrode)

Each slurry for a negative electrode according to Examples and Comparative Examples was prepared using each binder solution prepared. Specific methods are as follows.

The above binder solution, graphite as a negative electrode active material, and butyl butyrate were added to a PFA container, and the mixture was subjected to ultrasonication (50 seconds) once using an ultrasonic homogenizer to prepare a "negative electrode active material-binder slurry". To the obtained negative electrode active material-binder slurry, the binder solution, butyl butyrate, and a sulfide-based solid-state electrolyte ($30LiI \cdot 70(0.75Li_2S \cdot 0.25P_2S_5)$) were further added, and the mixture was subjected to ultrasonication (30 seconds) three times using the ultrasonic homogenizer to obtain a "slurry for a negative electrode" in which the negative electrode active material, the sulfide-based solid-state electrolyte, and the binder are highly dispersed. For the final binder solid concentration in the slurry was 3.0% by mass.

(Creation of negative electrode)

A copper foil as a negative electrode current collector was coated with each slurry for a negative electrode using a doctor blade and dried to obtain a negative electrode in which a negative electrode material layer having a thickness of 110 $\mu$m was formed on the surface of the negative electrode current collector.

(Preparation of slurry for positive electrode)

Each slurry for a positive electrode according to Examples and Comparative Examples was prepared using each binder solution prepared. Specific methods are as follows.

The above binder solution, a ternary active material $Li(NiMnCo)_{1/3}O_2$ as a positive electrode active material, and butyl butyrate were added to a PFA container, and the mixture was subjected to ultrasonication (50 seconds) once using an ultrasonic homogenizer to prepare a "positive electrode active material-binder slurry". To the obtained positive electrode active material-binder slurry, the binder solution, butyl butyrate, and a sulfide-based solid-state electrolyte $(30LiI\cdot70(0.75Li_2S\cdot0.25P_2S_5))$ were further added, and the mixture was subjected to ultrasonication (30 seconds) three times using the ultrasonic homogenizer to obtain a "slurry for a positive electrode" in which the positive electrode active material, the sulfide-based solid-state electrolyte, and the binder are highly dispersed. The final binder solid concentration in the slurry was 3.0% by mass.

(Creation of positive electrode)

An aluminum foil as a current collector was coated with each slurry for a positive electrode using a doctor blade and dried to obtain a positive electrode in which a positive electrode material layer having a thickness of 85 $\mu$m was formed on the surface of the positive electrode current collector.

(Creation of solid-state electrolyte layer)

An electrolyte slurry was prepared using butyl butyrate, the above sulfide-based solid-state electrolyte as the solid-state electrolyte, and the binder solution, and a peelable substrate (aluminum foil) was coated with the prepared electrolyte slurry using a doctor blade and dried to form a solid-state electrolyte layer having a thickness of 45 $\mu$m on the substrate. The mass ratio of the solid-state electrolyte to the binder in the solid-state electrolyte layer was set to solid-state electrolyte:binder = 100 parts by mass:1 part by mass. In the measurement of the maximum test force and the half width, a laminate including the solid-state electrolyte layer and the substrate (aluminum foil) (sometimes referred to as the "solid-state electrolyte layer-containing laminate" in the present disclosure) was used.

The preparation of the electrolyte slurry was as follows. That is, the solid-state electrolyte and the binder solution were added to butyl butyrate as the solvent, and the mixture was subjected to ultrasonication (30 seconds) once using an ultrasonic homogenizer to obtain an electrolyte slurry in which the solid-state electrolyte and the binder were highly dissolved or dispersed. The solid content thereof was 39%.

Results are shown in Table 1.

[Table 1]

Table 1

|  |  | | Polymer | Maximum test force | Half width | Adhesiveness |
|---|---|---|---|---|---|---|
| Positive electrode material layer | | Example 1 | Fluorine-containing copolymer a | 100 | 200 | 150 |
| | | Example 2 | Fluorine-containing copolymer b | 104 | 285 | 185 |
| | | Example 3 | Fluorine-containing copolymer c | 110 | 331 | 220 |
| | | Example 4 | Fluorine-containing copolymer d | 101 | 252 | 162 |
| | | Comparative Example 1 | Fluorine-containing copolymer e | 100 | 100 | 100 |
| Negative electrode material layer | | Example 5 | Fluorine-containing copolymer a | 99 | 221 | 130 |
| | | Example 6 | Fluorine-containing copolymer b | 106 | 263 | 160 |
| | | Example 7 | Fluorine-containing copolymer c | 109 | 288 | 184 |
| | | Example 8 | Fluorine-containing copolymer d | 100 | 232 | 171 |
| | | Comparative Example 2 | Fluorine-containing copolymer e | 100 | 100 | 100 |
| Electrolyte layer | | Example 9 | Fluorine-containing copolymer a | 99 | 176 | - |
| | | Example 10 | Fluorine-containing copolymer b | 104 | 191 | - |
| | | Example 11 | Fluorine-containing copolymer c | 110 | 246 | - |
| | | Example 12 | Fluorine-containing copolymer d | 100 | 183 | - |
| | | Comparative Example 3 | Fluorine-containing copolymer e | 100 | 100 | - |

## Claims

1. A binder for a solid-state electrolyte battery, comprising a polymer comprising a segment A having a glass transition temperature of 25°C or less and a segment B having a melting point of 50°C or more.

2. The binder for a solid-state electrolyte battery according to claim 1, wherein the segment A has a heat of fusion of less than 5 J/g, and the segment B has a heat of fusion of 5 J/g or more.

3. The binder for a solid-state electrolyte battery according to claim 1 or 2, wherein the polymer comprises a chain structure represented by a general formula (1) or a general formula (2):

General formula (1):        A-B-A

General formula (2):        B-A-B

wherein A represents the segment A, and B represents the segment B.

4. The binder for a solid-state electrolyte battery according to any one of claims 1 to 3, wherein the segment A of the polymer comprises a fluorine-containing monomer unit.

5. The binder for a solid-state electrolyte battery according to any one of claims 1 to 4, wherein the segment A of the polymer comprises vinylidene fluoride unit.

6. The binder for a solid-state electrolyte battery according to any one of claims 1 to 5, wherein the segment A of the polymer comprises vinylidene fluoride unit and at least one selected from the group consisting of repeating units represented by any of the following formulas:

Formula:  $-CF_2-CF[-CF_3]-$

Formula:  $-CH_2-CFRf^1-$

wherein $Rf^1$ is a linear or branched fluorinated alkyl group or fluorinated alkoxy group having 1 to 12 carbon atoms, and, when the number of carbon atoms is 2 or more, optionally includes oxygen atom between carbon atoms thereof,

Formula:  $-CHF-CHRf^2-$

wherein $Rf^2$ is a linear or branched fluorinated alkyl group or fluorinated alkoxy group having 1 to 12 carbon atoms, and, when the number of carbon atoms is 2 or more, optionally includes oxygen atom between carbon atoms thereof.

7. The binder for a solid-state electrolyte battery according to any one of claims 1 to 6, wherein the segment A of the polymer comprises vinylidene fluoride unit and 2,3,3,3-tetrafluoropropene unit.

8. The binder for a solid-state electrolyte battery according to any one of claims 5 to 7, wherein a content of vinylidene fluoride unit in the segment A of the polymer is 99 to 15 mol% based on all monomer units constituting the segment A.

9. The binder for a solid-state electrolyte battery according to any one of claims 1 to 8, wherein the segment B of the polymer comprises a fluorine-containing monomer unit.

10. The binder for a solid-state electrolyte battery according to any one of claims 1 to 9, wherein the segment B of the polymer comprises vinylidene fluoride unit.

11. The binder for a solid-state electrolyte battery according to claim 10, wherein a content of vinylidene fluoride unit in the segment B of the polymer is 97 mol% or more based on all monomer units constituting the segment B.

12. The binder for a solid-state electrolyte battery according to any one of claims 1 to 11, wherein
the segment B of the polymer comprises

only vinylidene fluoride unit, or
vinylidene fluoride unit and at least one monomer unit selected from the group consisting of tetrafluoroethylene unit, hexafluoropropylene unit, 2,3,3,3-tetrafluoropropene unit, and (meth)acrylic acid unit.

13. The binder for a solid-state electrolyte battery according to any one of claims 1 to 12, wherein a mass ratio of the segment A to the segment B, (A/B), in the polymer is 40/60 to 95/5.

14. The binder for a solid-state electrolyte battery according to any one of claims 1 to 13, wherein

the polymer comprises a chain structure represented by a general formula (1) or a general formula (2):

General formula (1):  A-B-A

General formula (2):  B-A-B

wherein A represents the segment A, and B represents the segment B,
the segment A of the polymer has a glass transition temperature of -10°C or less, and comprises vinylidene fluoride unit and a 2,3,3,3-tetrafluoropropene unit, wherein a content of the 2,3,3,3-tetrafluoropropene unit in the segment A is 18 to 30 mol% based on all monomer units constituting the segment A, and a content of vinylidene fluoride unit in the segment A is 70 to 82 mol% based on all monomer units constituting the segment A,

the segment B of the polymer has a melting point of 140 to 200°C, and comprises vinylidene fluoride unit, wherein a content of vinylidene fluoride unit in the segment B is 97 mol% or more based on all monomer units constituting the segment B,

a mass ratio of the segment A to the segment B in the polymer is 50/50 to 90/10, and

a weight average molecular weight of the polymer is 200,000 to 2,000,000.

15. A binder for a solid-state electrolyte battery comprising a polymer, wherein the polymer has a glass transition temperature and a melting point, comprises 2,3,3,3-tetrafluoropropene unit, and has an extraction in tetrahydrofuran at 25°C of 5% by mass or less.

16. The binder for a solid-state electrolyte battery according to claim 15, wherein the polymer further comprises vinylidene fluoride unit.

17. The binder for a solid-state electrolyte battery according to claim 15 or 16, wherein the polymer comprises two or more segments.

18. The binder for a solid-state electrolyte battery according to any one of claims 15 to 17, wherein

the glass transition temperature of the polymer is -10°C or less,

the melting point of the polymer is 140 to 200°C,

the polymer comprises vinylidene fluoride unit and 2,3,3,3-tetrafluoropropene unit, wherein a content of 2,3,3,3-tetrafluoropropene unit is 9 to 24 mol% based on all monomer units constituting the polymer, and a content of vinylidene fluoride unit is 76 to 91 mol% based on all monomer units constituting the polymer,

the extraction in tetrahydrofuran at 25°C of the polymer is 2 to 4% by mass, and

a weight average molecular weight of the polymer is 200,000 to 2,000,000.

19. A slurry for a solid-state electrolyte battery, comprising the binder for a solid-state electrolyte battery according to any one of claims 1 to 18, a solid-state electrolyte, and a solvent.

20. The slurry for a solid-state electrolyte battery according to claim 19, further comprising an electrode active material.

21. An electrode for a solid-state electrolyte battery, comprising an electrode material layer formed of the slurry for a solid-state electrolyte battery according to claim 19 or 20.

22. A solid-state electrolyte battery comprising the electrode according to claim 21.

23. A solid-state electrolyte battery comprising a solid-state electrolyte layer formed of the slurry for a solid-state electrolyte battery according to claim 19 or 20.

## INTERNATIONAL SEARCH REPORT

| International application No. |
| --- |
| **PCT/JP2024/032117** |

**A.    CLASSIFICATION OF SUBJECT MATTER**

*H01M 4/62*(2006.01)i; *C08F 293/00*(2006.01)i; *H01M 4/13*(2010.01)i; *H01M 4/139*(2010.01)i; *H01M 10/052*(2010.01)i; *H01M 10/058*(2010.01)i; *H01M 10/0562*(2010.01)i

FI:    H01M4/62 Z; C08F293/00; H01M4/13; H01M4/139; H01M10/052; H01M10/0562; H01M10/058

According to International Patent Classification (IPC) or to both national classification and IPC

**B.    FIELDS SEARCHED**

Minimum documentation searched (classification system followed by classification symbols)

H01M4/62; C08F293/00; H01M4/13; H01M4/139; H01M10/052; H01M10/058; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2021-514095 A (DSM IP ASSETS B.V.) 03 June 2021 (2021-06-03) claims, paragraphs [0012], [0030]-[0031], examples | 1-2, 13, 19-23 |
| A | | 3-12, 14-18 |
| X | JP 2000-123874 A (MATSUSHITA ELECTRIC INDUSTRIAL CO., LTD.) 28 April 2000 (2000-04-28) claims, paragraph [0011], examples | 1-2, 13, 19-23 |
| A | | 3-12, 14-18 |
| X | JP 2018-530662 A (ARKEMA FRANCE) 18 October 2018 (2018-10-18) claims, paragraph [0180], examples | 1, 3-10, 12-13, 15-23 |
| A | | 2, 11, 14 |

☑ Further documents are listed in the continuation of Box C.        ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 November 2024** | **26 November 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**

International application No.

**PCT/JP2024/032117**

| C. | DOCUMENTS CONSIDERED TO BE RELEVANT | |
|---|---|---|
| Category* | Citation of document, with indication, where appropriate, of the relevant passages | Relevant to claim No. |
| X | CN 115286805 A (NINGDE CONTEMPORARY AMPEREX TECHNOLOGY CO., LTD.) 04 November 2022 (2022-11-04) claims, paragraphs [0069]-[0071], [0089], [0147], examples | 1-3, 9-13, 19-23 |
| A | | 4-8, 14-18 |

Form PCT/ISA/210 (second sheet) (July 2022)

## INTERNATIONAL SEARCH REPORT

| International application No. |
| --- |
| **PCT/JP2024/032117** |

**Box No. III    Observations where unity of invention is lacking (Continuation of item 3 of first sheet)**

This International Searching Authority found multiple inventions in this international application, as follows:

Document 1: JP 2021-514095 A (DSM IP ASSETS B.V.) 03 June 2021 (2021-06-03)
    claims, paragraphs [0012], [0030]-[0031], examples
Document 2: JP 2000-123874 A (MATSUSHITA ELECTRIC IND CO LTD) 28 April 2000 (2000-04-28)
    claims, paragraph [0011], examples
Document 4: CN 115286805 A (NINGDE CONTEMPORARY AMPEREX TECHNOLOGY CO., LTD.), 04 November 2022 (2022-11-04)
    claims, paragraphs [0069]-[0071], [0089], [0147], examples

Invention 1: Claims 1-14 and the portions of claims 19-23 that refer back to claims 1-14
    Claims 1-14 and the portions of claims 19-23 that refer back to claims 1-14 have the special technical feature of a "solid electrolyte battery binding agent containing a polymer including a segment A having a glass transition temperature of 25°C or less and a segment B having a melting point of 50°C or more", and thus are classified as invention 1.

Invention 2: Claims 15-18 and the portions of claims 19-23 that refer back to claims 15-18
    Claims 15-18 and the portions of claims 19-23 that refer back to claims 15-18 share, with claim 1 classified as invention 1, the technical feature of a "solid electrolyte battery binding agent containing a polymer", wherein the "polymer" has a "glass transition temperature" and a "melting point". However, this technical feature does not make a contribution over the prior art in light of the content disclosed in documents 1, 2, and 4, and thus cannot be considered a special technical feature. Moreover, there is no other same or corresponding special technical feature among these inventions.
    Furthermore, claims 15-18 and the abovementioned portions of claims 19-23 do not depend from claim 1. Claims 15-18 and the abovementioned portions of claims 19-23 are also not substantially identical to or similarly closely related to any of the claims classified as invention 1.
    Accordingly, claims 15-18 and the abovementioned portions of claims 19-23 cannot be classified as invention 1.
    Claims 15-18 and the abovementioned portions of claims 19-23 have the special technical feature of a "solid electrolyte battery binding agent containing a polymer, wherein the polymer has a glass transition temperature and a melting point, contains a 2,3,3,3-tetrafluoropropene unit, and has a tetrahydrofuran extraction amount of 5% or less by mass at 25°C", and thus are classified as invention 2.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**    [ ] The additional search fees were accompanied by the applicant's protest and, where applicable, the payment of a protest fee.

[ ] The additional search fees were accompanied by the applicant's protest but the applicable protest fee was not paid within the time limit specified in the invitation.

[✓] No protest accompanied the payment of additional search fees.

Form PCT/ISA/210 (continuation of first sheet) (July 2022)

EP 4 715 908 A1

INTERNATIONAL SEARCH REPORT
Information on patent family members

International application No.

**PCT/JP2024/032117**

| Patent document cited in search report | | | Publication date (day/month/year) | Patent family member(s) | | | Publication date (day/month/year) |
|---|---|---|---|---|---|---|---|
| JP | 2021-514095 | A | 03 June 2021 | US 2020/0381780 A1 claims, paragraphs [0030], [0049]-[0050], examples WO 2019/158782 A1 EP 3756228 A1 CN 111742426 A KR 10-2020-0121852 A | | | |
| JP | 2000-123874 | A | 28 April 2000 | US 6368746 B1 claims, column 6, lines 36-46, examples WO 2000/024077 A1 EP 1049186 A1 | | | |
| JP | 2018-530662 | A | 18 October 2018 | US 2018/0305483 A1 claims, paragraph [0251], examples WO 2017/068276 A1 EP 3365377 A1 CN 108137724 A KR 10-2018-0068991 A | | | |
| CN | 115286805 | A | 04 November 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021015230 A
- WO 2021015229 A
- JP 53003495 A
- JP 61049327 A
- JP 2013216915 A